(19) Europäisches Patentamt
European Patent Office
Office européen des brevets

(11) **EP 1 589 672 B1**

(12) **FASCICULE DE BREVET EUROPEEN**

(45) Date de publication et mention
de la délivrance du brevet:
**04.06.2014 Bulletin 2014/23**

(21) Numéro de dépôt: **04291038.0**

(22) Date de dépôt: **22.04.2004**

(51) Int Cl.:
*H04B 7/005* (2006.01)  *H04L 1/06* (2006.01)
*H04L 1/00* (2006.01)  *H04B 7/00* (2006.01)

(54) **Procédé d'égalisation vectorielle itérative pour systèmes de communications CDMA sur canal MIMO**

Iterative Vektoregalisierungsverfahren für CDMA-Kommunikationssysteme über MIMO-Kanal

Iterative vectorized equalization method for CDMA communications systems on MIMO channel

(84) Etats contractants désignés:
**AT BE BG CH CY CZ DE DK EE ES FI FR GB GR
HU IE IT LI LU MC NL PL PT RO SE SI SK TR**

(43) Date de publication de la demande:
**26.10.2005 Bulletin 2005/43**

(73) Titulaire: **Orange
75015 Paris (FR)**

(72) Inventeurs:
• **Visoz, Raphael
92130 Issy Les Moulineaux (FR)**
• **Berthet, Antoine
92290 Chatenay Malabry (FR)**

(74) Mandataire: **Fontenelle, Sandrine et al
Cabinet Beau de Loménie
158, rue de l'Université
75340 Paris Cedex 07 (FR)**

(56) Documents cités:
**FR-A- 2 841 068     US-A1- 2002 168 017**

• WITZKE M ET AL: "Iterative detection of MIMO signals with linear detectors" CONFERENCE RECORD OF THE 36TH. ASILOMAR CONFERENCE ON SIGNALS, SYSTEMS, & COMPUTERS. PACIFIC GROOVE, CA, NOV. 3 - 6, 2002, ASILOMAR CONFERENCE ON SIGNALS, SYSTEMS AND COMPUTERS, NEW YORK, NY : IEEE, US, vol. VOL. 1 OF 2. CONF. 36, 3 novembre 2002 (2002-11-03), pages 289-293, XP010638218 ISBN: 0-7803-7576-9
• CHAN A M ET AL: "A new class of efficient block-iterative interference cancellation techniques for digital communication receivers", INTERNET CITATION, October 2000 (2000-10), XP002178475, Retrieved from the Internet: URL:http://allegro.mit.edu/dspg/publicatio ns/conferences/pdf/00chan2.pdf [retrieved on 2001-09-25]

**Description**

**DOMAINE TECHNIQUE GENERAL**

La présente invention est relative au domaine des communications numériques. Elle concerne la manière de décoder efficacement des données numériques transmises sur un canal MIMO sélectif en fréquence en optimisant le compromis performance / complexité.

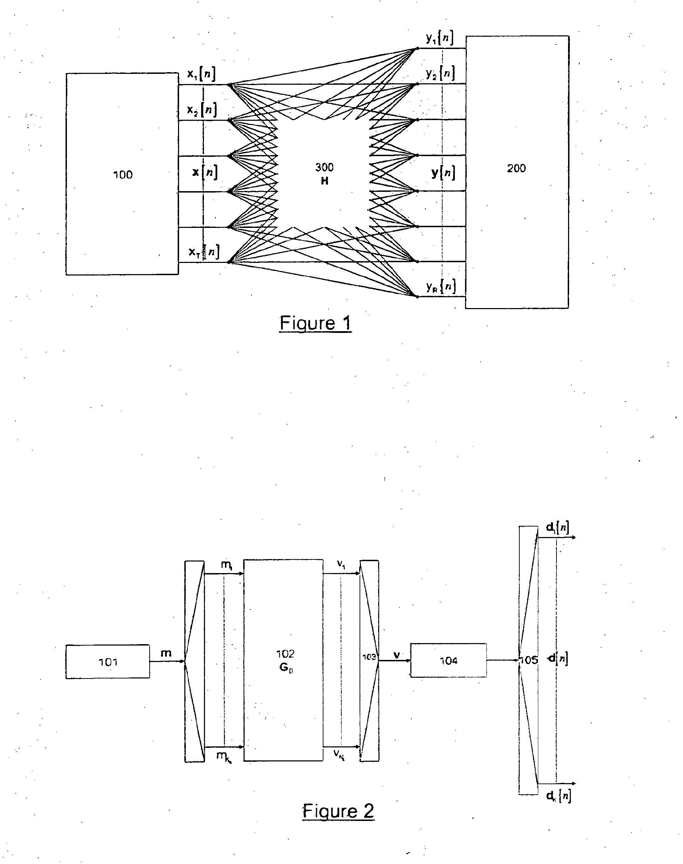

En référence à la figure 1, est illustré un procédé global de transmission sur canal 300 MIMO sélectif en fréquence, entre un émetteur 100 à antennes d'émission multiples (au nombre de T), délivrant des signaux x[n] à l'instant n, et un récepteur 200 à antennes de réception multiples (au nombre de R), recevant des signaux y[n] à l'instant n.

**PRESENTATION GENERALE DE L'ART ANTERIEUR**

Tout système de communication gérant l'accès d'utilisateurs multiples sur un même canal par l'attribution de codes d"étalement spécifiques (CDMA), est limité en capacité par l'interférence entre utilisateurs (notée MUI). Dans le cadre de cette invention, on envisage une transmission sur un canal susceptible d'engendrer d'autres sources d'interférences comme l'interférence spatiale issue d'antennes multiples à l'émission (notée MAI) et l'interférence entre symboles (notée ISI) introduite par la sélectivité fréquentielle du canal. En réception, ces différentes sources d'interférence s'ajoutent et rendent particulièrement délicat le problème de la récupération de l'information utile.

Les travaux précurseurs effectués par S. Verdu dans les années 1980 ont clairement démontré l'intérêt d'exploiter les propriétés structurelles de l'interférence entre utilisateurs (MUI), entre antennes (MAI) et entre symboles (ISI) en vue d'améliorer la performance pour un nombre d'utilisateurs/chip (encore appelée "load") fixé ou d'améliorer la load à performance fixée.

De nombreux types de détecteurs linéaires ont été étudiés, capables de supporter une load plus ou moins élevée, qui peut être évaluée analytiquement en régime asymptotique. Sans le recours aux techniques itératives, les performances de ces détecteurs restent très inférieures à la performance d'un détecteur ML, c'est-à-dire un détecteur utilisant un maximum de vraisemblance (pour un système avec ou sans codage).

La classe des détecteurs non linéaires construits à partir d'une annulation linéaire itérative de l'interférence (notée LIC-ID) offre ainsi un excellent compromis entre performance et complexité. Les détecteurs LIC-ID utilisent les fonctionnalités suivantes : filtrage linéaire, régénération pondérée de l'interférence (de quelque nature qu'elle soit), soustraction de l'interférence régénérée au signal reçu. Ils délivrent des décisions sur les données modulées (ou symboles) transmises dont la fiabilité augmente de façon monotone avec chaque nouvelle tentative. Les détecteurs LIC-ID qui sont destinés à supprimer l'ISI (par bloc) atteignent asymptotiquement la performance d'un détecteur optimal ML avec une complexité de calcul similaire à celle d'un égaliseur linéaire. Les détecteurs LIC-ID qui sont destinés à lutter contre la MUI approchent la performance du détecteur ML optimal avec une complexité de calcul comparable à celle d'un simple détecteur linéaire.

Un point remarquable des détecteurs LIC-ID est qu'ils peuvent être aisément combinés avec les décisions dures ou pondérées délivrées par le décodeur de canal, réalisant ainsi une détection et un décodage des données de manière disjointe et itérative.

Le document FR 2 841 068 décrit un procédé itératif pour décoder des codes espace-temps linéaires dans un système de transmission sans fil multi-antennes.

Pour des systèmes CDMA surchargés (MUI par hypothèse) transmettant sur des canaux MIMO sélectifs en fréquence, le niveau d'interférence est tel que le recours aux récepteurs LIC-ID s'avère indispensable en réception. Lorsqu'une stratégie itérative est choisie, la complexité des récepteurs ne peut être abaissée, et rendue raisonnable, qu'en simplifiant au maximum les traitements par itération. Les détecteurs LIC-ID ont été étudiés séparément pour le cas ISI et pour le cas MUI dans le document [1] (voir ci-après), dans le cas ISI et MUI dans [2] (voir ci-après).

> **[1]** A.M. Chan, G.W. Wornell, "A New Class of Efficient Block-Iterative Interference Cancellation Techniques for Digital Communication Receivers," IEEE J. VLSI Signal Processing (Special Issue on Signal Processing for Wireless Communication Systems), vol. 30, pp. 197-215, Jan.-Mar. 2002.
>
> **[2]** W. Wang, V.H. Poor, "Iterative (Turbo) Soft Interference Cancellation and Decoding for Coded CDMA," IEEE Trans. Commun., vol. COM-47, no. 9, pp. 2356-2374, Sept. 1999.

Leur généralisation au cas MUI+MAI+ISI constitue toujours un sujet de recherche ouvert, du fait notamment de la complexité du traitement à effectuer, ce dernier impliquant des calculs sur des matrices de tailles particulièrement importantes.

Une approche intéressante consiste à jouer sur l'ambiguïté inhérente à tout codage interne linéaire (ou procédé d'étalement), qui peut être vu indifféremment comme un accès multiple à K utilisateurs ou une modulation linéaire K-dimensionnelle. Le point de vue modulation K-dimensionnelle suggère de réaliser en réception une égalisation vectorielle de symboles K-dimensionnels. Pour interagir avec le décodeur de canal il reste à déterminer les probabilités a posteriori sur chaque bit de chaque symbole K-dimensionnel égalisé.

Un algorithme de décodage par sphère à listes a été récemment proposé dans [3] (voir ci-après) pour résoudre ce type de problème pour le décodage itératif des modulations codées entrelacées sur canaux MIMO ergodiques non sélectifs en fréquence. Cet algorithme fournit des performances proches des performances qui pourraient être obtenues par mise en oeuvre directe du critère MAP, avec une complexité grossièrement polynomiale en le nombre d'antennes.

**[3]** B.M. Hochwald, S. Ten Brink "Achieving Near-Capacity on a Multiple-Antenna Channel", IEEE Trans. Commun. Vol. COM-51, no. 3, pp. 389-399, May 2003.

La présente invention tire parti de l'existence de cet algorithme, en l'adaptant à un tout autre contexte.

## PRÉSENTATION DE L'INVENTION

L'invention propose, selon un premier aspect, un procédé de réception selon l'une des revendications 1 à 22.
L'invention propose, selon un deuxième aspect, un système de transmission selon la revendication 23.
L'invention propose, selon un troisième aspect, un procédé de réception selon l'une des revendications 24 à 29.
C'est un objet de la présente invention que de proposer un récepteur pour émission CDMA "Multicode" (K>T) et/ou surchargée (K utilisateurs, facteur d'étalement N<K) sur canal MIMO (T antennes d'émission et R antennes de réception) sélectif en fréquence, sous les hypothèses générales d'absence de CSI (i.e. information sur l'état du canal) à l'émission et de connaissance parfaite de CSI en réception. Ce récepteur est basé sur une combinaison de techniques et mécanismes simples, en vue d'obtenir la meilleure qualité de service possible à efficacité spectrale et SNR (i.e. rapport signal sur bruit) fixés, ou, corollairement, le meilleur débit utile possible, à qualité de service, bande et SNR fixés.
A cet effet, l'invention propose un dispositif d'égalisation et de décodage itératif comportant un détecteur de données recevant les données en provenance des différentes antennes d'émission comprenant :

- Un unique filtrage linéaire générant des statistiques sur les vecteurs symboliques K-dimensionnels émis en prenant en compte la diversité spatiale offerte par les R antennes de réception ;
- Des moyens pour, préalablement à tout filtrage linéaire, soustraire au signal reçu l'interférence régénérée à partir d'estimées des vecteurs symboliques K-dimensionnels émis à disposition ;
- Des moyens pour traiter la sortie K-dimensionnelle du filtre linaire en vue de générer une information probabiliste sur bit exploitable par le décodage externe ;
- Un décodage externe à entrées et sorties pondérées, capable de générer une information probabiliste dite extrinsèque, pertinente pour le calcul des estimées des données émises (au sens du critère de minimisation de l'erreur quadratique moyenne , ou MMSE) ;
- Des moyens pour, récursivement, concaténer la sortie du décodage externe avec le régénérateur d'interférence.

## DESCRIPTION DES FIGURES

D'autres caractéristiques et avantages de l'invention ressortiront encore de la description qui suit, laquelle est purement illustrative et non limitative et doit être lue en regard des dessins annexés sur lesquels :

- La figure 1 illustre un concept général de transmission sur un canal MIMO sélectif en fréquence ;
- La figure 2 illustre une première partie d'un procédé d'émission incluant un codage de canal externe de l'information numérique, un entrelacement, et un démultiplexage en K flux (un par utilisateur potentiel) ;
- La figure 3 illustre la deuxième partie du procédé d'émission selon la figure 2, incluant un étalement spatio-temporel (ou spatio-fréquentiel) puis un multiplexage sur T antennes d'émission ;
- La figure 4 illustre une première partie d'une variante d'un procédé d'émission, incluant un codage de canal externe de l'information numérique, un entrelacement, un premier démultiplexage en T flux (démultiplexage spatial) suivi d'un second démultiplexage en U flux (démultiplexage en codes) ;
- La figure 5 illustre la deuxième partie du procédé d'émission selon la figure 4, incluant un étalement temporel (ou fréquentiel) et un multiplexage indépendant par antenne, compatible avec le mode HSDPA de l'UMTS ;
- La figure 6 illustre un canal équivalent plat ergodique ou à évanouissement par blocs obtenu par une décomposition du canal MIMO sélectif en fréquence dans la base de Fourier et qui sert couramment de modèle pour les modulations multiporteuses ;
- La figure 7 illustre l'architecture d'un récepteur LIC-ID selon l'invention, où seuls sont indiqués les blocs fonctionnels, nécessaires à la compréhension du procédé de réception.

- Les figure 8a et 8b représentent deux méthodes d'implémentation équivalentes des récepteurs LIC-ID, la méthode d'implémentation de la figure 8a représentant les parties filtrage et régénération d'interférences du détecteur global illustré sur la figure 7.

## DESCRIPTION D'UNE FORME PRIVILIGIEE DE LA PRESENTE INVENTION

### 1. Structure générale de l'émetteur

La réception est intimement liée au mode d'émission, ce dernier pouvant être défini par un schéma de modulation/codage à grande efficacité spectrale, et haute capacité d'adaptabilité, reposant sur l'emploi de modulations par étalement de spectre et sur l'utilisation d'antennes multiples en émission et en réception. La solution proposée est pertinente sous l'hypothèse d'une absence de connaissance du canal à l'émission (pas de CSI) et d'une connaissance parfaite du canal en réception (CSI). Le modèle de communication est brièvement décrit dans la suite, en vue d'introduire une forme privilégiée de la présente invention.

En référence à la figure 2, les données numériques utiles sont collectées et groupées en un message $\mathbf{m}$ de $K_o$ bits constituant la source 101 des données numériques en émission. A tout message $\mathbf{m}$, un code externe $C_o$ linéaire, de matrice génératrice $\mathbf{G_o}$ de dimension $N_o \times K_o$ et construit sur $F_2$ assigne en 102 un mot de code v de longueur $N_o$ bits, défini par la relation matricielle :

$$\mathbf{v} = \mathbf{G}_o\, \mathbf{m}$$

Le rendement du codage externe est :

$$\rho = \frac{K_o}{N_o}$$

La longueur $N_o$ des mots de code est liée aux différents paramètres du système par la relation :

$$N_o = K \times L \times q$$

où K désigne le nombre total d'utilisateurs potentiels, L la longueur des paquets (en temps symbole) et q le nombre de bits par symbole de modulation. Le code peut être de tout type, par exemple un code convolutif, un turbo-codes, un code LDPC... Dans une configuration de type accès multiple, le message $\mathbf{m}$ consiste en une pluralité de messages issus de sources différentes et multiplexés. Le codage s'effectue indépendamment sur chaque message composant. Le mot de code $\mathbf{v}$ résulte de la concaténation en 103 des différents mots de code produits.

Le mot de code v est envoyé dans un entrelaceur 104 (opérant au niveau binaire et, le cas échéant, doté d'une structure particulière). Dans une configuration de type accès multiple, l'entrelacement agit par morceaux sur les différents mots de code placés les uns à la suite des autres. La sortie de cet entrelaceur est morcelée en $KL$ q-uplets de bits, appelés entiers. Le flux d'entiers est soumis à un procédé de démultiplexage 105 sur K voies distinctes, K pouvant être choisi arbitrairement de sorte à être strictement supérieur au nombre T d'antennes d'émission. La sortie de cette opération est une matrice d'entiers $\mathbf{D}$ de dimension $K \times L$. Les L colonnes $\mathbf{d}[n]$ $n = 0, ..., L\text{-}1$ de cette matrice $\mathbf{D}$ possèdent la structure suivante :

$$\mathbf{d}\big[n\big] = \Big[\ \mathbf{d}_1\big[n\big]^{\mathsf{T}} \quad \mathbf{d}_2\big[n\big]^{\mathsf{T}} \quad \cdots \quad \mathbf{d}_K\big[n\big]^{\mathsf{T}}\ \Big]^{\mathsf{T}} \in F_2^{qK}$$

où les entiers composants $\mathbf{d}_k[n]$ $k = 1, ..., K$ sont eux-mêmes structurés comme suit :

$$\mathbf{d}_k[n] = \begin{bmatrix} d_{k,1}[n] & d_{k,2}[n] & \cdots & d_{k,q}[n] \end{bmatrix}^{\mathsf{T}} \in F_2^q$$

Les entiers $\mathbf{d}_k[n]$ de la matrice $\mathbf{D}$ sont ensuite individuellement modulés en 107 en données modulées, ou plus précisément en symboles complexes $s_k[n]$ d'une constellation $\Im \subset \mathbb{C}$ à $Q = 2^q$ éléments au travers d'une table de modulation $\mu$ : $F_2^q \mapsto \Im$. Cette opération transforme la matrice d'entiers $\mathbf{D}$ en une matrice complexe $\mathbf{S}$ de dimension $K \times L$ dont les L colonnes $s[n]$ $n = 0, ..., L$-1 sont structurées de la manière suivante :

$$\mathbf{s}[n] \triangleq \mu(\mathbf{d}[n]) = \begin{bmatrix} s_1[n] & s_2[n] & \cdots & s_K[n] \end{bmatrix}^{\mathsf{T}} \in \Im^K$$

Il est utile de préciser les relations inverses suivantes :

$$\mu^{-1}(\mathbf{s}[n]) \triangleq \mathbf{d}[n] \quad \mu^{-1}(s_k[n]) \triangleq \mathbf{d}_k[n] \quad \mu_j^{-1}(s_k[n]) \triangleq d_{k,j}[n]$$

### 1.1 Cas d'un codage interne linéaire (ou étalement) spatio-temporel (ou alors spatio-fréquentiel) en régime surchargé

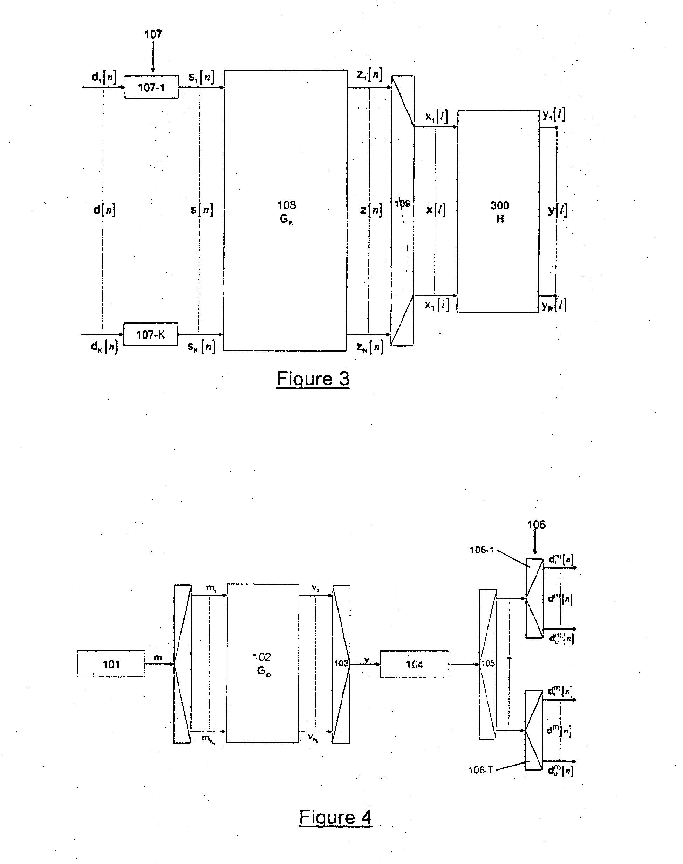

En référence à la figure 3, l'étalement 108 spatio-temporel (ou spatio-fréquentiel) est réalisé pour chaque matrice $\mathbf{S}$ au moyen d'une matrice génératrice $\mathbf{G}$ de dimension $N \times K$ (matrice génératrice du codage interne linéaire défini sur le corps des complexes), avec :

$$N = T \times S_F \quad S_F \in \mathbb{Z}$$

Cette matrice génératrice est aussi appelée matrice d'étalement. A titre d'exemple, on peut considérer que cette matrice est construite à partir de N codes d'étalement orthogonaux de facteur d'étalement N. Ce codage interne linéaire correspond donc, dans ce cas, à un étalement spatio-temporel (ou spatio-fréquentiel) de facteur d'étalement N. On appelle rendement de codage interne (ou load) du système le rapport :

$$\alpha = \frac{K}{N}$$

Deux options sont toujours possibles en ce qui concerne la définition de la matrice génératrice interne $\mathbf{G}$ : étalement 108 périodique où G est réutilisée à chaque temps symbole (non illustré), ou étalement 108 apériodique où $\mathbf{G}$ dépend explicitement du temps symbole (voir figure 3).
L'hypothèse d'un étalement périodique ou apériodique peut changer les caractéristiques des front-ends linéaires en réception.
On supposera ici un étalement apériodique (le plus général).
En référence à la figure 3, la multiplication en 108 des vecteurs de symboles $\mathbf{s}[n]$ par la matrice génératrice interne $\mathbf{G}_n$ donne lieu à un vecteur de N chips :

$$\mathbf{z}[n] \triangleq \mathbf{G}_n \mathbf{s}[n] = \begin{bmatrix} z_1[n] & z_2[n] & \cdots & z_N[n] \end{bmatrix}^{\mathsf{T}} \in \mathbb{C}^N$$

Les vecteurs de chips $\mathbf{z}[n]$ sont directement multiplexés en 109 sur les T antennes d'émission (on n'a pas ici d'entrelacement chip postérieur). Cette opération a pour effet de transformer la matrice de chips $\mathbf{Z}$ de dimension $N \times L$ :

$$\mathbf{Z} = \begin{bmatrix} \mathbf{z}[0] & \mathbf{z}[1] & \cdots & \mathbf{z}[L-1] \end{bmatrix} \in \mathbb{C}^{N \times L}$$

en une matrice de chips **X** de dimension $T \times LS_F$ :

$$\mathbf{X} = \begin{bmatrix} \mathbf{x}[0] & \mathbf{x}[1] & \cdots & \mathbf{x}[LS_F - 1] \end{bmatrix} \in \mathbb{C}^{T \times LS_F}$$

dont les colonnes $\mathbf{x}[l]$ $l = 0, \cdots, LS_F - 1$ constituent les entrées du canal MIMO :

$$\mathbf{x}[l] = \begin{bmatrix} x_1[l] & x_2[l] & \cdots & x_T[l] \end{bmatrix}^{\mathsf{T}} \in \mathbb{C}^{T}$$

Le vecteur $\mathbf{z}[n]$ des N chips émis à l'instant symbolique n peut toujours être organisé sous la forme d'un vecteur de chips $\underline{\mathbf{x}}[n]$ résultant de la juxtaposition des vecteurs de chips émis sur les T antennes entre les instants chips $l = nS_F$ et $l = nS_F + S_F - 1$ :

$$\underline{\mathbf{x}}[n] \triangleq \begin{bmatrix} \mathbf{x}[nS_F + S_F - 1]^{\mathsf{T}} & \cdots & \mathbf{x}[nS_F + 1]^{\mathsf{T}} & \mathbf{x}[nS_F + 0]^{\mathsf{T}} \end{bmatrix}^{\mathsf{T}} \in \mathbb{C}^{TS_F}$$

Ainsi, d'une manière générale, les vecteurs $\underline{\mathbf{x}}[n]$ $\mathbf{z}[n]$ et $\mathbf{s}[n]$ émis à l'instant symbolique n = 0, $\cdots$, $L$-1 sont liés par les relations matricielles :

$$\underline{\mathbf{x}}[n] \triangleq \Pi \mathbf{z}[n] = \Pi \, \mathbf{G}_{\scriptscriptstyle n} \, \mathbf{s}[n] = \mathbf{W}_n \, \mathbf{s}[n]$$

où $\Pi$ désigne une matrice de permutation de dimension $N \times N$.

### 1.2 Cas particulier : étalement indépendant par antenne d'émission (principe du « code re-use »)

Par hypothèse, N est ici un multiple de T :

$$N = T \times S_F \quad S_F \in \mathbb{Z}$$

On dispose de $S_F$ codes orthogonaux de longueur $S_F$. Ces $S_F$ codes sont réutilisés sur chaque antenne d'émission (principe dit du « code re-use »). L'étalement, réalisé indépendamment par antenne, est purement temporel (ou alors fréquentiel). Ceci impose que K soit également un multiple de T :

$$K = T \times U \quad U \in \mathbb{Z}$$

Condition qui entraîne une nouvelle expression du rendement de codage interne (ou encore de la load) :

$$\alpha = \frac{U}{S_F}$$

La matrice génératrice $\mathbf{G}_n$ possède une structure diagonale par blocs :

$$G_n = \begin{bmatrix} G_n^{(1)} & & & 0 \\ & G_n^{(2)} & & \\ & & \ddots & \\ 0 & & & G_n^{(T)} \end{bmatrix} \in \mathbb{C}^{N \times K}$$

le bloc $G_n^{(t)}$ de la matrice génératrice étant associé à l'antenne t de dimension $S_F \times U$.

En référence à la figure 4, le vecteur d'entier $\mathbf{d}[n]$ émis à l'instant n possède la structure particulière suivante :

$$\mathbf{d}[n] = \begin{bmatrix} \mathbf{d}^{(1)}[n]^{\mathsf{T}} & \mathbf{d}^{(2)}[n]^{\mathsf{T}} & \cdots & \mathbf{d}^{(T)}[n]^{\mathsf{T}} \end{bmatrix}^{\mathsf{T}} \in F_2^{qK}$$

où les vecteurs de symboles $d^{(t)}[n]$ $t = 1,...,T$ sont eux-mêmes définis comme :

$$\mathbf{d}^{(t)}[n] = \begin{bmatrix} \mathbf{d}_1^{(t)}[n]^{\mathsf{T}} & \mathbf{d}_2^{(t)}[n]^{\mathsf{T}} & \cdots & \mathbf{d}_U^{(t)}[n]^{\mathsf{T}} \end{bmatrix}^{\mathsf{T}} \in F_2^{qU}$$

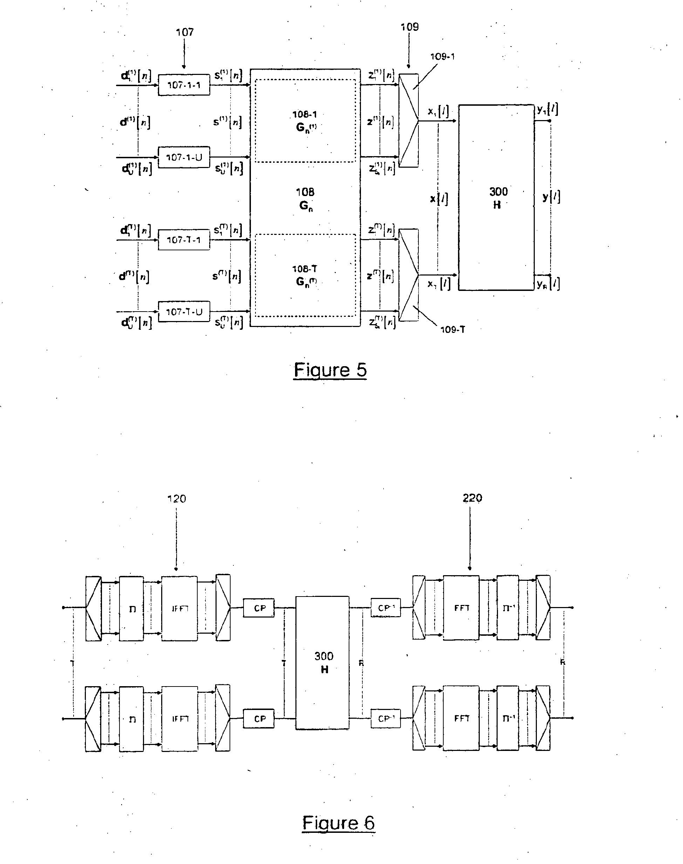

En référence à la figure 5, la modulation 107 de ces données d[n] donne un vecteur de données modulées (ou de symboles) émises à l'instant n ayant la structure particulière suivante :

$$\mathbf{s}[n] = \begin{bmatrix} \mathbf{s}^{(1)}[n]^{\mathsf{T}} & \mathbf{s}^{(2)}[n]^{\mathsf{T}} & \cdots & \mathbf{s}^{(T)}[n]^{\mathsf{T}} \end{bmatrix}^{\mathsf{T}} \in \mathbb{C}^{K}$$

où les vecteurs de symboles $\mathbf{s}^{(t)}[n]$ $t = 1, ..., T$ sont eux-mêmes définis comme :

$$\mathbf{s}^{(t)}[n] = \begin{bmatrix} s_1^{(t)}[n] & s_2^{(t)}[n] & \cdots & s_U^{(t)}[n] \end{bmatrix}^{\mathsf{T}} \in \mathbb{C}^{U}$$

La multiplication 108 du symbole K-dimensionel $\mathbf{s}[n]$ par la matrice génératrice $G_n$ donne lieu à un vecteur de N chips, qui possède également une structure particulière :

$$\mathbf{z}[n] \triangleq G_n \mathbf{s}[n] = \begin{bmatrix} \mathbf{z}^{(1)}[n]^{\mathsf{T}} & \mathbf{z}^{(2)}[n]^{\mathsf{T}} & \cdots & \mathbf{z}^{(T)}[n]^{\mathsf{T}} \end{bmatrix}^{\mathsf{T}} \in \mathbb{C}^{N}$$

où les vecteurs de chips $\mathbf{z}^{(t)}[n]$ $t=1, ..., T$ sont eux-mêmes définis comme :

$$\mathbf{z}^{(t)}[n] \triangleq G_n^{(t)} \mathbf{s}^{(t)}[n] = \begin{bmatrix} z_1^{(t)}[n] & z_2^{(t)}[n] & \cdots & z_{S_F}^{(t)}[n] \end{bmatrix}^{\mathsf{T}} \in \mathbb{C}^{S_F}$$

Chaque vecteur de chips $\mathbf{z}^{(t)}[n]$ est ensuite multiplexé sur l'antenne d'émission t.

Le vecteur $\mathbf{z}[n]$ des N chips émis à l'instant symbolique peut toujours être organisé sous la forme d'un vecteur de chips $\underline{\mathbf{x}}[n]$ résultant de la juxtaposition des vecteurs de chips émis sur les T antennes entre les instants chips $l = nS_F$ et $l = nS_F + S_F-1$ :

$$\underline{\mathbf{x}}[n] \triangleq \left[ \mathbf{x}\left[nS_F + S_F - 1\right]^{\mathsf{T}} \quad \cdots \quad \mathbf{x}\left[nS_F + 1\right]^{\mathsf{T}} \quad \mathbf{x}\left[nS_F + 0\right]^{\mathsf{T}} \right]^{\mathsf{T}} \in \mathbb{C}^{TS_F}$$

Ainsi, d'une manière générale, les vecteurs $\underline{\mathbf{x}}[n]$ $\mathbf{z}[n]$ et $\mathbf{s}[n]$ émis à l'instant symbolique $n = 0,\cdots,$ $L$-1 sont liés par les relations matricielles :

$$\underline{\mathbf{x}}[n] \triangleq \Pi\, \mathbf{z}[n] = \Pi\, \mathbf{G}_n\, \mathbf{s}[n] = \mathbf{W}_n\, \mathbf{s}[n]$$

où $\Pi$ désigne une matrice de permutation de dimension $N \times N$ .

On remarquera que dans cette variante d'émission, la récupération de la diversité spatiale s'effectue au travers du code $G_0$ (en 102) et de l'entrelacement binaire externes en 104. La capacité de surcharge, connue pour augmenter avec la longueur des codes d'étalement, est moindre.

Le procédé d'émission s'inscrit naturellement dans la classe générale des codes espace-temps. L'efficacité spectrale du système (en bits par utilisation du canal), sous l'hypothèse d'un filtre de Nyquist idéal à bande limitée, est égale à :

$$\eta = T \times \rho_O \times q \times \alpha$$

En pratique, le filtre de mise en forme à l'émission présente un facteur $\varepsilon$ de débordement non nul (roll-off). En réception, un filtre adapté à ce filtre d'émission est appliqué pour toutes les antennes de réception. Il est supposé que les fonctions d'estimation de canal et de synchronisation de rythme et de porteuse sont réalisées de telle sorte que les coefficients de la réponse impulsionnelle du canal soient espacés régulièrement d'une valeur égale au temps chip (canal équivalent en bande de base discret au temps chip). Cette hypothèse est légitime, le théorème d'échantillonnage de Shannon imposant un échantillonnage au rythme $(1 + \varepsilon)/T_c$ qui peut être approché par $1 / T_c$ lorsque $\varepsilon$ est petit. On pourra généraliser de façon directe des expressions qui suivent pour un échantillonnage égal à un multiple de $1/T_c$.

### 2. Modèle de canal

La transmission s'effectue sur un canal B-blocs à entrées et sorties multiples (MIMO) sélectif en fréquence :

$$\mathbf{H} \triangleq \left\{ \mathbf{H}^{(1)}, \mathbf{H}^{(2)}, \ldots, \mathbf{H}^{(B)} \right\}$$

Le canal $\mathbf{H}^{(b)}$ est supposé constant sur $L_x$ chips avec la convention :

$$L \times S_F = B \times L_x \quad B \in \mathbb{Z}$$

La matrice de chips $\mathbf{X}$ peut être segmentée en B matrices de chips distinctes $\mathbf{X}^{(1)},...,$ $\mathbf{X}^{(B)},$ de dimension $T \times L_X$ (complétées à droite et à gauche par des zéros physiques ou temps de garde si besoin est), chaque matrice $\mathbf{X}^{(b)}$ voyant le canal $\mathbf{H}^{(b)}$. Pour la suite, il est utile d'introduire une longueur des blocs en symboles, définie comme :

$$L_S \triangleq \left\lceil \frac{L_x}{S_F} \right\rceil$$

de telle sorte que :

$$L = B \times L_S$$

Les cas extrêmes du modèle B-blocs sont les suivants :

$B = 1$ et $L_X = LS_F \Rightarrow L_S = L$ modèle quasi-statique
$B = LS_F$ et $L_X = 1 \Rightarrow L_S = 1$ modèle ergodique (chip)

Une renumérotation des symboles et des chips est appliquée à l'intérieur de chaque bloc.

### 2.1. Modèle de canal convolutif

Pour tout indice de bloc b, le modèle de canal équivalent en bande de base à temps discret (rythme chip) permet d'écrire le vecteur reçu $y^{(b)}[l] \in \mathbb{C}^R$ à l'instant chip 1 sous la forme :

$$\mathbf{y}^{(b)}[l] = \sum_{p=0}^{P-1} \mathbf{H}_p^{(b)} \mathbf{x}^{(b)}[l-p] + \mathbf{v}^{(b)}[l].$$

où P désigne la longueur de contrainte du canal (en chips), $x^{(b)}[l] \in \mathbb{C}^T$ désigne le vecteur complexe de T chips émis à l'instant chip 1, où $\mathbf{H}_p^{(b)} \in \mathbb{C}^{R \times T}$ est le coefficient matriciel indicé p de la réponse impulsionnelle du canal MIMO bloc indicé b et où $\mathbf{v}^{(b)}[l] \in \mathbb{C}^R$ est le vecteur complexe de bruit additif. Les vecteurs complexes de bruit additif $\mathbf{v}^{(b)}[l]$ sont supposés indépendants et identiquement distribués selon une loi gaussienne R-dimensionnelle à symétrie circulaire de moyenne nulle et de matrice de covariance $\sigma^2 I$. Les P coefficients de la réponse impulsionnelle sont des matrices complexes de dimension $R \times T$, dont les entrées sont gaussiennes indépendantes identiquement distribuées, de moyenne nulle et de matrice de covariance satisfaisant la contrainte globale de normalisation en puissance :

$$E\left[ \text{diag} \left\{ \sum_{p=0}^{P-1} \mathbf{H}_p^{(b)} \mathbf{H}_p^{(b)\dagger} \right\} \right] = T\mathbf{1}$$

dans le cas d'un système à puissance également répartie entre les différentes antennes d'émission. Sous ces hypothèses, les valeurs propres des matrices de corrélation des différents coefficients du canal MIMO suivent une distribution de Wishart. On souligne qu'une égale répartition de la puissance sur les antennes d'émission est une politique d'allocation de puissance légitime dans le cas d'une absence de connaissance du canal à l'émetteur (pas de CSI).

### 2.2. Modèle de canal matriciel bloc

Pour introduire l'algorithme de décodage des données, on se doit de faire apparaître un système matriciel sur l'ensemble du type :

$$\underline{\underline{\mathbf{y}}}^{(b)} = \underline{\underline{\mathbf{H}}}^{(b)} \underline{\underline{\mathbf{x}}}^{(b)} + \underline{\underline{\mathbf{v}}}^{(b)}$$

où :

$$\underline{\underline{\mathbf{y}}}^{(b)} \triangleq \left[ \underline{\mathbf{y}}^{(b)}[L_S - 1 + M]^{\mathsf{T}} \quad \underline{\mathbf{y}}^{(b)}[L_S - 2 + M]^{\mathsf{T}} \quad \cdots \quad \underline{\mathbf{y}}^{(b)}[0]^{\mathsf{T}} \right]^{\mathsf{T}} \in \mathbb{C}^{(L_S + M)RS_F}$$

$$\underline{\underline{v}}^{(b)} \triangleq \left[ \underline{v}^{(b)} \left[ L_S - 1 + M \right]^\mathsf{T} \quad \underline{v}^{(b)} \left[ L_S - 2 + M \right]^\mathsf{T} \quad \cdots \quad \underline{v}^{(b)} \left[ 0 \right]^\mathsf{T} \right]^\mathsf{T} \in \mathbb{C}^{(L_S + M) R S_F}$$

avec M, la mémoire du canal en temps symbole, définie comme :

$$M = \left\lceil \frac{P-1}{S_F} \right\rceil$$

avec :

$$\underline{y}^{(b)}\left[ n \right] \triangleq \left[ y^{(b)}\left[ nS_F + S_F - 1 \right]^\mathsf{T} \quad \cdots \quad y^{(b)}\left[ nS_F + 1 \right]^\mathsf{T} \quad y^{(b)}\left[ nS_F + 0 \right]^\mathsf{T} \right]^\mathsf{T} \in \mathbb{C}^{RS_F}$$

$$\underline{v}^{(b)}\left[ n \right] \triangleq \left[ v^{(b)}\left[ nS_F + S_F - 1 \right]^\mathsf{T} \quad \cdots \quad v^{(b)}\left[ nS_F + 1 \right]^\mathsf{T} \quad v^{(b)}\left[ nS_F + 0 \right]^\mathsf{T} \right]^\mathsf{T} \in \mathbb{C}^{RS_F}$$

où :

$$\underline{\underline{x}}^{(b)} \triangleq \left[ \underline{x}^{(b)}\left[ L_S - 1 \right]^\mathsf{T} \quad \underline{x}^{(b)}\left[ L_S - 2 \right]^\mathsf{T} \quad \cdots \quad \underline{x}^{(b)}\left[ 0 \right]^\mathsf{T} \right]^\mathsf{T} \in \mathbb{C}^{L_S T S_F}$$

avec :

$$\underline{x}^{(b)}\left[ n \right] \triangleq \left[ x^{(b)}\left[ nS_F + S_F - 1 \right]^\mathsf{T} \quad \cdots \quad x^{(b)}\left[ nS_F + 1 \right]^\mathsf{T} \quad x^{(b)}\left[ nS_F + 0 \right]^\mathsf{T} \right]^\mathsf{T} \in \mathbb{C}^{TS_F}$$

et où $\underline{\underline{H}}^{(b)}$ est la matrice de Sylvester pour le canal :

$$\underline{\underline{H}}^{(b)} = \begin{bmatrix} \mathbf{H}_{P-1}^{(b)} \\ \mathbf{H}_{P-2}^{(b)} & \mathbf{H}_{P-1}^{(b)} \\ & & \ddots \\ & & & \mathbf{H}_0^{(b)} & \mathbf{H}_1^{(b)} & \cdots & \mathbf{H}_{P-1}^{(b)} \\ & & & & \mathbf{H}_0^{(b)} & \mathbf{H}_1^{(b)} & \cdots & \mathbf{H}_{P-1}^{(b)} \\ & & & & & \ddots & \ddots & & \ddots \\ & & & & & & \mathbf{H}_0^{(b)} & \mathbf{H}_1^{(b)} & \cdots & \mathbf{H}_{P-1}^{(b)} \\ & & & & & & & & \ddots \\ & & & & & & & & & \mathbf{H}_0^{(b)} & \mathbf{H}_1^{(b)} \\ & & & & & & & & & & \mathbf{H}_0^{(b)} \end{bmatrix} \in \mathbb{C}^{(L_S + M) R S_F \times L_S T S_F}$$

Par ailleurs :

$$\underline{\underline{x}}^{(b)} = \begin{bmatrix} \underline{x}^{(b)}[L_S - 1] \\ \underline{x}^{(b)}[L_S - 2] \\ \vdots \\ \underline{x}^{(b)}[0] \end{bmatrix} = \begin{bmatrix} \mathbf{W}_{L-1} & & \\ & \mathbf{W}_{L-2} & \\ & & \ddots \\ & & & \mathbf{W}_0 \end{bmatrix} \begin{bmatrix} s^{(b)}[L_S - 1] \\ s^{(b)}[L_S - 2] \\ \vdots \\ s^{(b)}[0] \end{bmatrix} = \underline{\underline{W}} \underline{\underline{s}}^{(b)}$$

$W_n$ n=1, ... , L-1 ayant été introduit ci-dessus à partir de la matrice d'étalement $G_n$ lors de la description de formes privilégiées d'émission (fin des chapitres 1.1 et 1.2).

D'où finalement le système :

$$\underline{\underline{y}}^{(b)} = \underline{\underline{H}}^{(b)} \underline{\underline{W}} \underline{\underline{s}}^{(b)} + \underline{\underline{v}}^{(b)} = \underline{\underline{\Theta}}^{(b)} \underline{\underline{s}}^{(b)} + \underline{\underline{v}}^{(b)}$$

où $\underline{\underline{\Theta}}^{(b)}$ représente la matrice de convolution du canal avec les codes d'étalement :

$$\underline{\underline{\Theta}}^{(b)} \triangleq \underline{\underline{H}}^{(b)} \underline{\underline{W}} \in \mathbb{C}^{(L_S+M)RS_F \times L_S K}$$

### 2.3. Modèle de canal matriciel à fenêtre glissante

En pratique, pour réduire les dimensions, on utilise un modèle à fenêtre glissante de longueur :

$$L_W = L_1 + L_2 + 1 \ll L_S$$

On obtient le nouveau système :

$$\underline{\underline{y}}^{(b)}[n] = \underline{\underline{H}}^{(b)} \underline{\underline{x}}^{(b)}[n] + \underline{\underline{v}}^{(b)}[n]$$

où :

$$\underline{\underline{y}}^{(b)}[n] = \left[ \underline{y}^{(b)}[n+L_1]^{\mathsf{T}} \cdots \underline{y}^{(b)}[n-L_2]^{\mathsf{T}} \right]^{\mathsf{T}} \in \mathbb{C}^{L_W RS_F}$$

$$\underline{\underline{x}}^{(b)}[n] = \left[ \underline{x}^{(b)}[n+L_1]^{\mathsf{T}} \cdots \underline{x}^{(b)}[n-L_2-M]^{\mathsf{T}} \right]^{\mathsf{T}} \in \mathbb{C}^{(L_W+M)TS_F}$$

$$\underline{\underline{v}}^{(b)}[n] = \left[ \underline{v}^{(b)}[n+L_1]^{\mathsf{T}} \cdots \underline{v}^{(b)}[n-L_2]^{\mathsf{T}} \right]^{\mathsf{T}} \in \mathbb{C}^{L_W RS_F}$$

et où $\underline{H}^{(b)}$ est la matrice de Sylvester pour le canal :

$$\underline{\underline{\mathbf{H}}}^{(b)} = \begin{bmatrix} \mathbf{H}_0^{(b)} & \mathbf{H}_1^{(b)} & \cdots & \mathbf{H}_{P-1}^{(b)} & & \\ & \mathbf{H}_0^{(b)} & \mathbf{H}_1^{(b)} & \cdots & \mathbf{H}_{P-1}^{(b)} & \\ & & \ddots & \ddots & \ddots & \ddots \\ & & & \mathbf{H}_0^{(b)} & \mathbf{H}_1^{(b)} & \cdots & \mathbf{H}_{P-1}^{(b)} \end{bmatrix} \in \mathbb{C}^{L_W R S_F \times (L_W + M) T S_F}$$

Par ailleurs :

$$\underline{\underline{\mathbf{x}}}^{(b)}[n] = \begin{bmatrix} \underline{\mathbf{x}}^{(b)}[n+L_1] \\ \vdots \\ \underline{\mathbf{x}}^{(b)}[n-L_2-M] \end{bmatrix} = \begin{bmatrix} \mathbf{W}_{n+L_1} & & \\ & \ddots & \\ & & \mathbf{W}_{n-L_2-M} \end{bmatrix} \begin{bmatrix} \mathbf{s}^{(b)}[n+L_1] \\ \vdots \\ \mathbf{s}^{(b)}[n-L_2-M] \end{bmatrix} = \underline{\underline{\mathbf{W}}}_n \underline{\mathbf{s}}^{(b)}[n]$$

D'où finalement le système :

$$\underline{\mathbf{y}}^{(b)}[n] = \underline{\underline{\mathbf{H}}}^{(b)} \underline{\underline{\mathbf{W}}}_n \underline{\mathbf{s}}^{(b)}[n] + \underline{\mathbf{v}}^{(b)}[n] = \underline{\underline{\Theta}}_n^{(b)} \underline{\mathbf{s}}^{(b)}[n] + \underline{\mathbf{v}}^{(b)}[n]$$

où $\underline{\underline{\Theta}}_n^{(b)}$ représente la matrice de convolution du canal avec les codes d'étalement :

$$\underline{\underline{\Theta}}_n^{(b)} \triangleq \underline{\underline{\mathbf{H}}}^{(b)} \underline{\underline{\mathbf{W}}}_n \in \mathbb{C}^{L_W R S_F \times (L_W - M) K}$$

## 3. Transmission monoporteuse sur canal MIMO à trajets multiples (HSDPA)

On suppose que le débit est très élevé et que le temps de cohérence du canal est grand, de telle sorte que $L_X \gg S_F \Rightarrow L_S \gg 1$. Pour le mode HSDPA de la norme UMTS, le canal est quasi-statique, c'est-à-dire B=1.

## 4. Transmission multiporteuse sur canal MIMO à trajets multiples (MC-CDMA)

L'étalement (ou encore le codage interne linéaire) est ici spatio-fréquentiel ou fréquentiel. En référence à la figure 6, il est bien connu de l'homme de l'art que l'introduction d'une IFFT en émission 120 et d'une FFT en réception 220 (aux entrelacements près) donne un canal équivalent non sélectif en fréquence (canal modélisé par une matrice circulante grâce à l'emploi de préfixes cycliques, puis rendu diagonal dans la base de Fourier). Ainsi chaque porteuse voit un canal MIMO plat. Sous le formalisme précédemment présenté, le canal après FFT peut être vu comme un canal non sélectif (P = 1, M = 0) et B-blocs. On précise que $L_X \le S_F \Rightarrow L_S = 1$ : le canal est B-blocs au temps chip mais tout se passe comme s'il était "ergodique" au temps symbole pour le modèle symbolique considéré. La largeur de la fenêtre glissante pour le calcul des filtres est $L_W = 1$.

## 5. Structure générale du récepteur 200

Le récepteur 200 met en oeuvre une égalisation vectorielle LIC-ID. Deux types de front end linéaires sont dérivés à titre d'exemples : MMSE non conditionnel et SUMF. Dans le reste de la description, nous omettrons de définir l'indice b du bloc considéré du modèle de canal, les traitements étant identiques pour tous.

## 5.1. Estimation MMSE des symboles K-dimensionels émis

A toute itération i, on suppose une connaissance a priori sur les données exprimée au travers de rapports logarithmiques sur les bits des symboles émis :

$$\pi_{k,j}^{i}\left[n\right] \triangleq \ln \frac{\Pr^{i}\left[d_{k,j}\left[n\right]=1\right]}{\Pr^{i}\left[d_{k,j}\left[n\right]=0\right]}$$

Par convention, ces rapports valent 0 à la première itération.

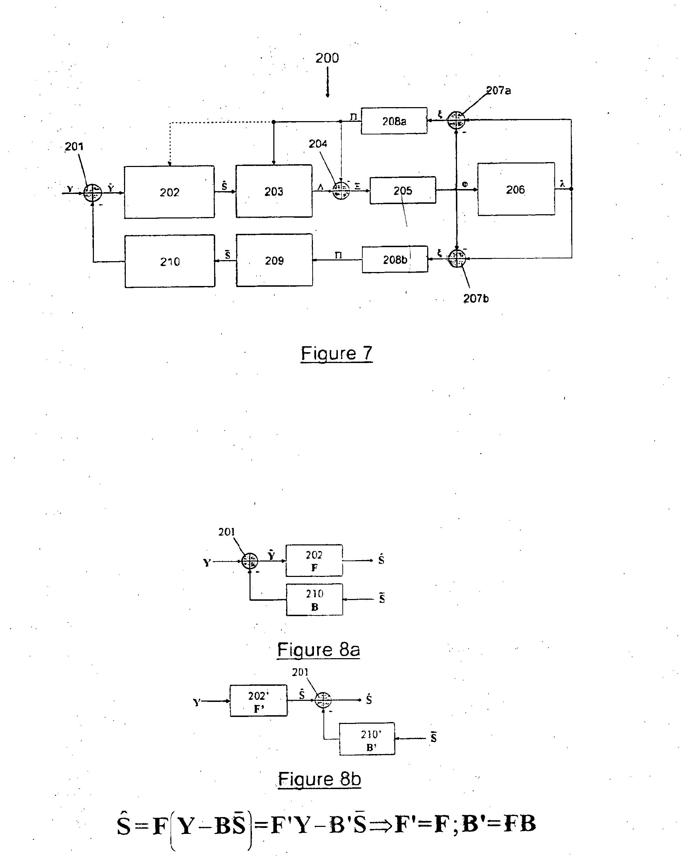

En référence à la figure 7, à partir de cette information a priori, on peut trouver en 209 le vecteur $\overline{\mathbf{s}}^{i}$ des estimées, au sens du critère MMSE, des L symboles K-dimensionnels $\mathbf{s}[n]$ aux instants $n = 0, ..., L$-1. L'estimée d'un symbole K-dimensionnel s'exprime comme :

$$\overline{\mathbf{s}}^{i}\left[n\right] \triangleq \sum_{\mathbf{s}\in\mathfrak{I}^{K}} \mathbf{s} \times \Pr^{i}\left[\mathbf{s}\left[n\right]=\mathbf{s}\right]$$

Lorsque la profondeur de l'entrelacement espace-temps est grande, la probabilité a priori sur un symbole K-dimensionnel peut être approchée par le produit des probabilités marginales des bits qui le composent :

$$\Pr^{i}\left[\mathbf{s}\left[n\right]=\mathbf{s}\right] \approx \prod_{k=1}^{K}\prod_{j=1}^{q} \Pr^{i}\left[d_{k,j}\left[n\right]=\mu_{k,j}^{-1}(\mathbf{s})\right]$$

l'égalité ayant lieu pour une profondeur d'entrelacement infinie.

En introduisant le rapport logarithmique $\pi_{k,j}^{i}[n]$ des probabilités a priori sur bit précédemment défini, on peut écrire que :

$$\Pr^{i}\left[\mathbf{s}\left[n\right]=\mathbf{s}\right] = \frac{1}{2^{qK}}\prod_{k=1}^{K}\prod_{j=1}^{q}\left\{1+\left(2\mu_{k,j}^{-1}(\mathbf{s})-1\right)\tanh\left(\frac{\pi_{k,j}^{i}\left[n\right]}{2}\right)\right\}$$

et trouver finalement :

$$\overline{\mathbf{s}}^{i}\left[n\right] \triangleq \frac{1}{2^{qK}}\sum_{\mathbf{s}\in\mathfrak{I}^{K}}\mathbf{s}\times\prod_{k=1}^{K}\prod_{j=1}^{q}\left\{1+\left(2\mu_{k,j}^{-1}(\mathbf{s})-1\right)\tanh\left(\frac{\pi_{k,j}^{i}\left[n\right]}{2}\right)\right\}$$

### 5.2. Egalisation vectorielle MMSE non conditionnelle

L'invention suggère de remplacer la détection optimale des symboles K-dimensionnels $\mathbf{s}[n]$ (au sens du critère MAP) par une estimation au sens du critère MMSE (biaisée), dérivée sur la base du modèle à fenêtre glissante, dont la complexité est polynomiale en les paramètres du système et non plus exponentielle.

A chaque itération i, on calcule en 202 le filtre $\mathbf{F}_{n}^{i} \in \mathbb{C}^{K \times L_{w} \cdot RS_{f}}$ qui, à partir d'une observation actualisée (portant sur une portion du bloc du canal déterminé) supprime l'ISI corrompant le symbole K-dimensionnel $\mathbf{s}[n]$ et produit une évaluation $\hat{\mathbf{s}}[n]$ des données modulées (ou symboles) émises minimisant l'erreur quadratique moyenne (MSE) :

$$E\left[\left\|\hat{\mathbf{s}}\left[n\right]-\mathbf{s}\left[n\right]\right\|^{2}\right] = \operatorname{tr} E\left[\left(\hat{\mathbf{s}}\left[n\right]-\mathbf{s}\left[n\right]\right)\left(\hat{\mathbf{s}}\left[n\right]-\mathbf{s}\left[n\right]\right)^{\dagger}\right]$$

A partir du vecteur des estimées des symboles K-dimensionnels à l'itération i :

$$\underline{\underline{\mathbf{s}}}^{i}[n] = \left[ \overline{\mathbf{s}}^{i}[n+L_{1}]^{\mathsf{T}} \quad \cdots \quad \overline{\mathbf{s}}^{i}[n]^{\mathsf{T}} \quad \cdots \quad \overline{\mathbf{s}}^{i}[n-L_{2}-M]^{\mathsf{T}} \right]^{\mathsf{T}} \in \mathbb{C}^{(L_{W}+M)K}$$

on définit en 210 la version modifiée, comportant un 0 en position $L_1 + 1$, qui sert à la régénération de l'interférence pour le symbole K-dimensionnel $\mathbf{s}[n]$ :

$$\underline{\underline{\mathbf{s}}}_{\Delta}^{i}[n] = \left[ \overline{\mathbf{s}}^{i}[n+L_{1}]^{\mathsf{T}} \quad \cdots \quad \overline{\mathbf{s}}^{i}[n+1]^{\mathsf{T}} \quad \mathbf{0}^{\mathsf{T}} \quad \overline{\mathbf{s}}^{i}[n-1]^{\mathsf{T}} \quad \cdots \quad \overline{\mathbf{s}}^{i}[n-L_{2}-M]^{\mathsf{T}} \right]^{\mathsf{T}} \in \mathbb{C}^{(L_{W}+M)K}$$

Une estimation d'interférences est ainsi régénérée en 210, en multipliant ce dernier vecteur, avec ladite « matrice de convolution du canal avec les codes d'étalement » $\underline{\Theta}_{n}$, (calculée au chapitre **2.2** ou **2.3**):

$$\underline{\underline{\Theta}}_{n} \underline{\underline{\mathbf{s}}}_{\Delta}^{i}[n]$$

Le filtre de Wiener est appliqué en 202 au vecteur d'observation obtenu après soustraction 201 de cette interférence régénérée en 210 :

$$\underline{\hat{\mathbf{y}}}^{i}[n] = \underline{\mathbf{y}}[n] - \underline{\underline{\Theta}}_{n} \underline{\underline{\mathbf{s}}}_{\Delta}^{i}[n]$$

Pour des raisons de complexité évidentes, la MSE est non conditionnelle et l'étalement périodique, de telle sorte que :

$$\underline{\underline{\Theta}}_{n} = \underline{\underline{\Theta}} \quad \forall n = 0, \ldots, L_{S} - 1$$

Ceci rend le filtre $\mathbf{F}^{i}$ invariant dans le temps pour le bloc considéré du canal déterminé. Il sera préféré de ne pas utiliser cette estimation MMSE au profit d'un front end linéaire plus simple (polynomial ou SUMF, décrit au prochain chapitre) lorsque l'étalement est apériodique.

Ce filtre minimise la MSE non conditionnelle sur l'estimation (biaisée) du symbole K-dimensionnel $\mathbf{s}[n]$ et peut être aisément dérivé à partir du théorème de la projection orthogonale :

$$\mathbf{F}^{i} = \mathbf{E}_{\Delta} \underline{\underline{\Theta}}^{\dagger} \left[ \underline{\underline{\Theta}} \underline{\underline{\Xi}}_{\Delta}^{i} \underline{\underline{\Theta}}^{\dagger} + \sigma^{2} \mathbf{I} \right]^{-1}$$

où $\mathbf{E}_{\Delta}$ est la matrice de dimension $K \times (L_W + M)K$ structurée comme suit :

$$\mathbf{E}_{\Delta} = \left[ \underbrace{\mathbf{0} \quad \cdots \quad \mathbf{0}}_{L_{1}} \quad \mathbf{I} \quad \underbrace{\mathbf{0} \quad \cdots \quad \mathbf{0}}_{L_{2}+M} \right] \in \mathbb{C}^{K \times (L_{F}+M)K}$$

et où :

$$\underline{\underline{\Xi}}_{\Delta}^{i} \triangleq E \left\{ \left( \underline{\underline{\mathbf{s}}}[n] - \underline{\underline{\mathbf{s}}}_{\Delta}^{i}[n] \right) \left( \underline{\underline{\mathbf{s}}}[n] - \underline{\underline{\mathbf{s}}}_{\Delta}^{i}[n] \right)^{\dagger} \right\} \in \mathbb{C}^{(L_{W}+M)K \times (L_{W}+M)K}$$

$$\underline{\underline{\Xi}}_{\Delta}^{i} = \mathrm{diag} \left\{ \left( \sigma_{s}^{2} - \sigma_{\bar{s}}^{i2} \right) \mathbf{I}, \ldots, \left( \sigma_{s}^{2} - \sigma_{\bar{s}}^{i2} \right) \mathbf{I}, \sigma_{s}^{2} \mathbf{I}, \left( \sigma_{s}^{2} - \sigma_{\bar{s}}^{i2} \right) \mathbf{I}, \ldots, \left( \sigma_{s}^{2} - \sigma_{\bar{s}}^{i2} \right) \mathbf{I} \right\}$$

avec le terme $\sigma_{\tilde{s}}^2$] situé à la position $L_1 + 1$ sur la diagonale et $\sigma$ $\sigma_{\tilde{s}}^{i\,2}$ évalué en utilisant l'estimateur consistant :

$$\sigma_{\tilde{s}}^{i\,2} \approx \hat{\sigma}_{\tilde{s}}^{i\,2} \triangleq \frac{1}{KL_S} \sum_{k=1}^{K} \sum_{n=0}^{L_S-1} \left| \overline{s}_k^i\,[n] \right|^2$$

L' évaluée $\hat{s}^i$ est donnée par la sortie du filtre 202 :

$$\hat{s}^i\,[n] \triangleq \mathbf{F}^i\,\underline{\tilde{y}}^i\,[n] = \Psi_0^i\,s\,[n] + \zeta^i\,[n]$$

où :

$$\Psi_0^i = \mathbf{F}^i\,\underline{\Theta}\,\mathbf{E}_\Delta^\dagger$$

et où $\zeta^i[n]$ est le vecteur d'interférence résiduelle et de bruit de matrice de covariance :

$$\Xi_\zeta^i = \sigma_s^2 \left( 1 - \Psi_0^i \right) \Psi_0^{i\dagger}$$

Le vecteur K-dimensionnel d'interférence résiduelle et de bruit $\zeta^i[n]$ peut être blanchi par décomposition de Cholesky.

$$\Xi_\zeta^i = \mathbf{L}\mathbf{L}^\dagger$$

### 5.3. Egalisation vectorielle SUMF

L'approche MMSE précédemment décrite peut se révéler trop complexe (pour un étalement apériodique par exemple). On peut lui préférer le filtre Single User Matched Filter vectoriel, ceci pour toutes les itérations ou à partir d'une certaine itération i. Celui-ci s'exprime pour tout instant n:

$$\mathbf{F}_n^{\,i} = \mathbf{E}_\Delta\,\underline{\Theta}_n^{\,\dagger}$$

### Autre variante possible de l'égalisation :

En référence à la figure 8b est représentée une variante de l'un ou l'autre des détections détaillées aux chapitres **5.2** et **5.3**. Cette vairante concerne une façon différente de mettre en oeuvre le filtrage 202' et la régénération d'interférences 210', qui est à comparer au filtrage 202 et à la régénération d'interférences 210 de la figure 8a (représentant ces deux étapes de détection correspondant à une partie de la détection globale schématisée sur la figure 7).

En référence à la figure 8b, le filtrage 202' se fait ici en amont de la soustraction d'interférences 201 régénérées en 210', et non en aval comme c'est le cas en référence à la figure 8a.

Le filtre F' utilisé et la matrice de reconstruction d'interférences B' utilisés peuvent se déduire de façon triviale du filtre F et de la matrice de reconstruction d'interférences B précédemment calculés (cf ci-dessus en référence aux figures 7 et 8a), à partir de l'égalité suivante :

$$\hat{S} = F\left(Y - B\bar{S}\right) = F'Y - B'\bar{S}$$

Pour en déduire alors :

$$F' = F \; ; \; B' = FB$$

### 5.4. Détection des composantes binaires des symboles K-dimensionnels

En appliquant le filtre $L^{-1}F^i$, on produit le modèle équivalent :

$$\hat{s}^i\left[n\right] = L^{-1}\Psi_0^i\,s\left[n\right] + \zeta^i\left[n\right]$$

où le vecteur $\zeta^i[n]$ est de matrice de covariance identité.

On utilise une détection vectorielle pour calculer en 203 des rapports logarithmiques des probabilités a posteriori sur chaque bit de chaque symbole K-dimensionnel émis à chaque instant. Ces quantités probabilistes sont définies, selon un critère optimal de « Maximum A Posteriori » (MAP), comme :

$$\lambda_{k,j}^i\left[n\right] \triangleq \ln \frac{\Pr\left[d_{k,j}\left[n\right] = 1\middle|\hat{s}^i\left[n\right]\right]}{\Pr\left[d_{k,j}\left[n\right] = 0\middle|\hat{s}^i\left[n\right]\right]}$$

et sont référencées A sur la figure 7 ;
soit encore :

$$\lambda_{k,j}^i\left[n\right] = \ln \frac{\sum_{d\in N_{k,j}^{(1)}} \Pr\left[d\left[n\right] = d\middle|\hat{s}^i\left[n\right]\right]}{\sum_{d\in N_{k,j}^{(0)}} \Pr\left[d\left[n\right] = d\middle|\hat{s}^i\left[n\right]\right]}$$

où l'on introduit :

$$N_{k,j}^{(\varepsilon)} = \left\{d \in F_2^{qK}\middle|d_{k,j} = \varepsilon\right\}$$

ou encore :

$$\lambda_{k,j}^i\left[n\right] = \ln \frac{\sum_{d\in N_j^{(1)}} p\left(\hat{s}^i\left[n\right]\middle|s\left[n\right] = \mu(d)\right)\Pr^i\left[d\left[n\right] = d\right]}{\sum_{d\in N_j^{(0)}} p\left(\hat{s}^i\left[n\right]\middle|s\left[n\right] = \mu(d)\right)\Pr^i\left[d\left[n\right] = d\right]}$$

avec $\Pr^i\left[d\left[n\right] = d\right] = \prod_{k=1}^{K}\prod_{j=1}^{q}\Pr^i\left[d_{k,j}\left[n\right] = d_{k,j}\right]$ obtenu à partir des $\pi_{k,j}^i\left[n\right]$ (voir chapitre 5.1).

Quant aux vraisemblances, elles s'expriment comme :

$$p\left(\hat{s}^i\left[n\right]\middle|s\left[n\right]=\mu(\mathbf{d})\right)\propto\exp\left(-\left(\hat{s}^i\left[n\right]-\mathbf{L}^{-1}\Psi_0^i\mu(\mathbf{d})\right)^{\intercal}.\left(\hat{s}^i\left[n\right]-\mathbf{L}^{-1}\Psi_0^i\mu(\mathbf{d})\right)\right)$$

**Variante 1 :** Est ici remplacé le traitement vectoriel 203 selon un critère MAP, par un traitement vectoriel 203 utilisant un algorithme de décodage par sphère à listes, dont la complexité est moindre puisque polynomiale en K (et non exponentielle en K, comme l'est le critère MAP).

**Variante 2 :** Ici, le traitement vectoriel 203 est une annulation linéaire itérative dérivée d'un critère MMSE, ou d'un critère de maximisation d'un rapport signal sur bruit (encore appelé MAX SNR) étant réalisé par des filtres adaptés (SUMF).

**Variante 3 :** Le traitement vectoriel 203 comprend ici la mise en oeuvre successive de plusieurs traitements vectoriels différents à partir d'itération(s) donnée(s), chacun de ces traitements vectoriels étant un de ceux discutés précédemment dans ce chapitre. Par exemple, est réalisé un traitement « MAP » jusqu'à l'itération i, puis un traitement « sphère à liste » jusqu'à l'itération i+M, puis un traitement « MMSE ».

Cette 3$^{ème}$ variante est rendue possible grâce au degré de liberté additionnel dont on dispose pour réaliser une détection vectorielle, à une itération i donnée.

### 5.5. Echange d'information probabiliste avec le décodeur de canal 206

A chaque itération i, une information a priori sur les bits des différents symboles, en provenance du décodeur de canal 206, est disponible et exploitable sous la forme de rapports logarithmiques de probabilité a priori, préalablement introduits et dont on rappelle l'expression :

$$\pi_{k,j}^i\left[n\right]\triangleq\ln\frac{\Pr^i\left[d_{k,j}\left[n\right]=1\right]}{\Pr^i\left[d_{k,j}\left[n\right]=0\right]}$$

L'information extrinsèque sur chaque bit délivrée par la détection vectorielle à destination du décodeur de canal 206, est délivrée par un démodulateur 203 à sortie pondérée, sous la forme suivante :

$$\xi_{k,j}^i\left[n\right]\triangleq\lambda_{k,j}^i\left[n\right]-\pi_{k,j}^i\left[n\right]$$

Elle est notée $\Xi$ sur la figure 7.

Tous les rapports logarithmiques d'information extrinsèque sur bits sont ensuite collectés pour tous les blocs, puis proprement multiplexés et désentrelacés en 205, à destination du décodeur de canal 206. Ce dernier observe un unique vecteur $\boldsymbol{\varphi}^i\in\mathbb{R}^{N_c}$, composé de $N_o$ rapports logarithmiques de probabilité intrinsèque sur bit (un par bit du mot de code v). Le décodage 206 utilise alors un algorithme, tel qu'un algorithme de Viterbi assorti souple, pour délivrer le logarithme $\lambda$ d'un rapport de probabilités d'informations a posteriori sur bits des données modulées (ou symboles) émises.

Cette logarithmique $\lambda$ est alors la base sur laquelle sont calculés en 207a et 207b les rapports logarithmiques d'information extrinsèque sur bit après décodage, formellement définis $\forall l$=1, ..., $N_o$ comme :

$$\xi_l^i\triangleq\ln\frac{\Pr^i\left[v_l=1\middle|C_o,\varphi^i\big/\left\{\varphi_l^i\right\}\right]}{\Pr^i\left[v_l=0\middle|C_o,\varphi^i\big/\left\{\varphi_l^i\right\}\right]}$$

Les rapports logarithmiques d'information extrinsèque sur bits de mot de code $\left\{\xi_l^i\right\}$ calculés à l'itération i sont assimilés, après entrelacement binaire et démultiplexage 208a et 208b aux rapports logarithmiques de probabilité a priori sur bits de symboles $\left\{ \pi_{k,j}^{i+1}\left[ n \right] \right\}$ à l'itération suivante.

La réception selon l'invention concerne non seulement un procédé permettant sa mise en oeuvre, mais aussi le système apte à l'exécuter, ainsi que tout système de transmission intégrant ce système de réception.

## Revendications

**1.** Procédé de réception pour communication sur canal sélectif en fréquence à plusieurs antennes en émission et à plusieurs antennes en déception, la réception étant apte à traiter des données reçues par les antennes de réception qui avaient été, à leur émission, successivement codées puis :

    (A) modulées sur un nombre K de voies, K étant strictement supérieur au nombre T d'antennes d'émission ; et
    (B) étalées avec une matrice d'étalement périodique ou apériodique ($\mathbf{G_n}$) de dimensions N×K où N est strictement supérieur à T, sur les vecteurs de dimension K des données modulées;

et ledit procédé étant **caractérisé en ce que** la réception met en oeuvre itérativement à cet effet :

    - un filtrage au moyen d'un unique filtre linéaire (202, 202') apte à traiter les données reçues, le cas échéant après soustraction d'une estimation d'interférences, pour générer un vecteur K-dimensionnel correspondant à une évaluation ($\hat{\mathbf{S}}$) des données modulées émises avant l'étalement de l'étape (B), ce filtrage prenant notamment en compte la diversité spatiale de la pluralité d'antennes en réception ;
    - avant ou après ledit filtrage, une soustraction d'interférences (201) qui utilise une estimation d'interférences inter-antennes MAI, inter-données ISI, et inter-utilisateurs MUI préalablement régénérée à partir d'informations calculées sur la base d'un vecteur K-dimensionnel ($\hat{\mathbf{S}}$) généré par un précédent filtrage ;
    - un traitement générant une estimation d'interférences sur les données reçues, à partir d'informations calculées sur la base du vecteur K-dimensionnel ($\hat{\mathbf{S}}$), ce traitement mettant en oeuvre un traitement vectoriel à sortie pondérée (203), au moins un décodage (206) et une régénération d'interférences (210,210'), le traitement vectoriel à sortie pondérée (203) traitant le vecteur K-dimensionnel ($\hat{\mathbf{S}}$) et générant une information probabiliste sur bit de donnée modulée exploitable par le décodage, le décodage (206) générant une quantité probabiliste ($\lambda$) à partir de ladite information probabiliste, la régénération d'interférences (210) générant une estimation d'interférences sur la base de cette quantité probabiliste ($\lambda$), cette estimation d'interférences étant alors envoyée récursivement à la prochaine étape de soustraction (201).

**2.** Procédé de réception selon la revendication 1, **caractérisé en ce que** l'étalement de l'étape (B) en émission est effectué avec K strictement supérieur à N.

**3.** Procédé selon l'une des revendications précédentes, **caractérisé en ce que** la réception est adaptée pour traiter des données qui avaient été, à l'émission, étalées lors de l'étape (B), indépendamment par antenne avec un nombre de voies par antenne strictement supérieur à 1, la matrice d'étalement ($\mathbf{G_n}$) étant diagonale par blocs avec un nombre de blocs égal ou nombre d'antennes, les blocs ayant été construits à partir de N/T codes orthogonaux.

**4.** Procédé selon l'une des revendications 1 à 2, **caractérisé en ce que** la réception est adaptée pour traiter des données qui avaient été, à l'émission, étalées lors de l'étape (B) au moyen d'une matrice d'étalement ($\mathbf{G_n}$) pleine construite à partir de N codes orthogonaux.

**5.** Procédé de réception selon l'une des revendications précédentes, **caractérisé en ce que** l'unique filtre linéaire (202, 202') est dérivé selon le critère de minimisation de l'erreur quadratique moyenne.

**6.** Procédé de réception selon l'une des revendications 1 à 4, **caractérisé en ce que** l'étalement de l'étape (B) de l'émission a été effectué de façon périodique, et **en ce que** l'unique filtre linéaire (202, 202') est dérivé selon le critère de minimisation de l'erreur quadratique moyenne dite non conditionnelle, le filtre étant invariant dans le temps pour un canal donné.

**7.** Procédé de réception selon l'une des revendications 1 à 4, **caractérisé en ce que** l'unique filtre linéaire est un filtre adapté vectoriel.

**8.** Procédé de réception selon l'une des revendications 1 à 4, **caractérisé en ce que** l'unique filtre linéaire est d'abord dérivé selon le critère de minimisation de l'erreur quadratique moyenne, puis devient un filtre adapté vectoriel à partir d'une itération donnée.

**9.** Procédé de réception selon l'une des revendications précédentes, **caractérisé en ce que** le filtrage prend notamment en compte la diversité spatiale de la pluralité d'antennes en réception en maximisant le rapport signal-sur-bruit en sortie du filtrage (202).

**10.** Procédé de réception selon l'une des revendications précédentes, **caractérisé en ce que** l'unique filtre est calculé à partir de fenêtres glissantes.

**11.** Procédé de réception selon la revendication 10, **caractérisé en ce que** la régénération d'interférences (210) génère une estimation d'interférences à partir d'une estimée ($\overline{S}$) des données modulées émises, estimée ($\overline{S}$) calculée (209) au sens du critère de minimisation de l'erreur quadratique moyenne sur la base d'une information dite extrinsèque ($\xi$) fonction des bits émis précédemment disponibles en sortie du décodage (206).

**12.** Procédé de réception selon l'une des revendications 1 à 10, **caractérisé en ce que** les données à l'émission avaient été, avant l'étape (A), codées et entrelacées, et **en ce que**, en réception, ledit traitement générant une estimation d'interférences met en oeuvre :

- ledit traitement vectoriel à sortie pondérée (203), à partir du vecteur K-dimensionnel ($\hat{S}$) et de statistiques de décodage ($\Pi$) issues d'un décodage (206), générant une statistique ($\Lambda$) par bit de donnée modulée ;
- un désentrelacement (205) au niveau binaire de statistiques extrinsèques ($\Xi$) trouvées à partir de la quantité probabiliste ($\Lambda$) générée précédemment;
- ledit au moins un décodage (206) à entrée et à sortie pondérées, à partir des données ainsi désentrelacées ($\varphi$), produisant une quantité probabiliste ($\lambda$) sur l'ensemble des bits ;
- un entrelacement (208a-208b) au niveau binaire de statistiques extrinsèques ($\xi$) trouvées à partir de la quantité probabiliste ($\lambda$), lesdites nouvelles statistiques ainsi entrelacées ($\Pi$) étant ensuite envoyées récursivement à l'étape suivante de traitement vectoriel à sortie pondérée (203) ;
- ladite régénération d'interférences (210,210') générant une estimation d'interférences sur la base d'une estimée ($\overline{S}$) des données modulées émises, qui ont été calculées (209) au sens du critère de minimisation de l'erreur quadratique moyenne à partir desdites nouvelles statistiques entrelacées ($\Pi$), cette estimation d'interférences étant alors envoyée récursivement à la prochaine étape de soustraction (201).

**13.** Procédé de réception selon l'une des revendications 9 à 12 **caractérisé en ce que** le traitement vectoriel à sortie pondérée (203) est dérivé selon le critère optimal Maximum A Posteriori.

**14.** Procédé de réception selon l'une des revendications 9 à 12 **caractérisé en ce que** le traitement vectoriel à sortie pondérée (203) est réalisé au moyen d'un algorithme de décodage par sphère à listes.

**15.** Procédé de réception selon l'une des revendications 9 à 12 **caractérisé en ce que** le traitement vectoriel à sortie pondérée (203) est une annulation linéaire itérative d'interférences dérivée selon un critère de minimisation de l'erreur quadratique moyenne.

**16.** Procédé de réception selon l'une des revendications 9 à 12 **caractérisé en ce que** le traitement vectoriel à sortie pondérée (203) est une annulation linéaire itérative d'interférences dérivée selon le critère de maximisation du rapport signal sur bruit utilisant des filtres adaptés.

**17.** Procédé de réception selon l'une des revendications 9 à 12, **caractérisé en ce que** le traitement vectoriel à sortie pondérée (203) comprend la mise en oeuvre successive de plusieurs traitements vectoriels différents à partir d'itération(s) donnée(s), chacun de ces traitements vectoriels pouvant être : un algorithme dérivé selon le critère optimal Maximum A Posteriori, ou un algorithme de décodage par sphère à listes, ou un algorithme dérivé selon le critère de minimisation de l'erreur quadratique moyenne, ou un algorithme dérivé selon le critère de maximisation du rapport signal sur bruit utilisant des filtres adaptés.

**18.** Procédé de réception selon l'une des revendications 1 à 17, **caractérisé en ce que** ladite quantité probabiliste ($\lambda$) en sortie de décodage (206) est le logarithme d'un rapport de probabilités d'informations a posteriori sur bits de données modulées.

**19.** Procédé de réception selon la revendication précédente, **caractérisé en ce que** le décodage (206) calcule ladite quantité probabiliste ($\lambda$) au moyen d'un algorithme de Viterbi à entrée et à sortie pondérées.

**20.** Procédé de réception selon l'une des revendications précédentes, **caractérisé en ce que** l'étalement de l'étape (B) en émission étant réalisé en fréquences, la transmission avant réception était de type multiporteuse.

**21.** Procédé de réception selon l'une des revendications 1 à 19, **caractérisé en ce que** l'étalement de l'étape (B) en émission étant réalisé en temps, la transmission avant réception était de type monoporteuse.

**22.** Système de réception pour communication sur canal sélectif en fréquence à plusieurs antennes en émission et à plusieurs antennes en réception, le système étant apte à traiter des données reçues par les antennes de réception qui avaient été, à leur émission, successivement codées puis :

(A) modulées sur un nombre K de voies, K étant strictement supérieur au nombre T d'antennes d'émission ; et
(B) étalées avec une matrice générique d'étalement périodique ou apériodique ($G_n$) de dimensions $N \times K$ où N est strictement supérieur à T, sur les vecteurs de dimension K des données modulées ;

**caractérisé en ce que** le système comprend à cet effet :

- un unique filtre linéaire (202, 202') apte à traiter les données reçues, le cas échéant après soustraction d'une estimation d'interférences, pour générer vecteur K-dimensionnel ($\hat{S}$) correspondant à une évaluation des données modulées émises avant l'étalement de l'étape (B), ce filtre prenant notamment en compte la diversité spatiale de la pluralité d'antennes en réception ;
- en amont ou en aval dudit filtre unique, un soustracteur d'interférences (201) qui utilise une estimation d'interférences inter-antennes MAI, inter-données modulées ISI, et inter-utilisateurs MUI préalablement régénérée à partir d'informations calculées sur la base d'un vecteur K-dimensionnel ($\hat{S}$) précédemment généré par le filtre unique;
- des moyens de traitement aptes à générer une estimation d'interférences sur les données reçues, à partir d'informations calculées sur la base du vecteur K-dimensionnel ($\hat{S}$), lesdits moyens de traitement comprenant des moyens de traitement vectoriel à sortie pondérée (203), au moins un décodeur (206) et un régénérateur d'interférences (210, 210'), lesdits moyens de traitement vectoriel à sortie pondérée (203) étant aptes à traiter le vecteur K-dimensionnel ($\hat{S}$) et à générer une information probabiliste sur bit de donnée modulée exploitable par le décodeur, le décodeur (206) étant apte à générer une quantité probabiliste ($\lambda$) à partir de ladite information probabiliste, le régénérateur d'interférences (210,210') générant une estimation d'interférences sur la base de cette quantité probabiliste ($\lambda$), cette estimation d'interférences étant alors envoyée récursivement au soustracteur (201) ;

ces différents éléments du système de réception étant aptes à être mis en oeuvre de façon itérative.

**23.** Système de réception selon la revendication précédente, **caractérisé en ce que** l'unique filtre linéaire est dérivé selon le critère de minimisation de l'erreur quadratique moyenne.

**24.** Système de réception selon la revendication 22, **caractérisé en ce que** l'unique filtre linéaire est un filtre adapté.

**25.** Système de réception selon la revendication 22, **caractérisé en ce que** l'unique filtre linéaire est d'abord dérivé selon le critère de minimisation de l'erreur quadratique moyenne, puis devient un filtre adapté à partir d'une itération donnée.

**26.** Système de réception selon l'une des revendications 22 à 25, **caractérisé en ce que** :

• ledit moyen de traitement vectoriel à sortie pondérée (203), est apte à démoduler à partir du dernier vecteur K-dimensionnel ($\hat{S}$) et de statistiques de décodage ($\Pi$) issues d'un décodage (206), et à générer une statistique ($\Lambda$) par bit de donnée modulée ;
• lesdits moyens de traitement générant une estimation d'interférences comprennent en outre un désentrelaceur (205) au niveau binaire de statistiques extrinsèques ($\Xi$) trouvées à partir de la quantité probabiliste ($\Lambda$) générée précédemment;
• ledit au moins un décodeur (206) à entrée et à sortie pondérées, est apte à décoder à partir des données ainsi désentrelacées ($\varphi$), et à produire une quantité probabiliste ($\lambda$) sur l'ensemble des bits ;

• lesdits moyens de traitement générant une estimation d'interférences comprennent en outre un entrelaceur (208a-208b) au niveau binaire de statistiques extrinsèques ($\xi$) trouvées à partir de la quantité probabiliste ($\lambda$), lesdites nouvelles statistiques ainsi entrelacées ($\Pi$) étant ensuite envoyées récursivement au moyen de traitement vectoriel à sortie pondérée (203) ;

• ledit régénérateur (210, 210') d'interférences étant apte à générer une estimation d'interférences sur la base d'une estimée ($\bar{S}$) des données modulées émises, qui ont été calculées (209) au sens du critère de minimisation de l'erreur quadratique moyenne à partir desdites nouvelles statistiques entrelacées ($\Pi$), cette estimation d'interférences étant alors envoyée récursivement au soustracteur (201).

27. Système de transmission comprenant un système de réception et selon l'une quelconque des revendications 22 à 26, **caractérisé en ce qu'**il comprend en outre :

- un système d'émission comprenant une pluralité d'antennes d'émission et apte à coder des données numériques, à moduler sur un nombre K de voies les données numériques codées, K étant strictement supérieur au nombre T d'antennes d'émission, et à étaler avec une matrice d'étalement périodique ou apériodique ($\mathbf{G_n}$) de dimensions N×K où N est strictement supérieur à T, sur les vecteurs de dimension K des données modulées ;
- un canal de transmission sélectif en fréquence ;

## Patentansprüche

1. Empfangsverfahren für Kommunikationen über einen frequenzselektiven Kanal mit mehreren Sendeantennen und mit mehreren Empfangsantennen, wobei der Empfang geeignet ist, durch die Empfangsantennen empfangene Daten zu verarbeiten, die bei ihrer Sendung aufeinanderfolgend codiert wurden und dann:

(A) auf einer Anzahl K von Wegen moduliert wurden, wobei K strikt größer als die Anzahl T der Sendeantennen ist; und

(B) mit einer periodischen oder aperiodischen Spreizungsmatrix ($\mathbf{G_n}$) mit den Dimensionen N×K, wo N strikt größer ist als T, auf den Vektoren der Dimension K der modulierten Daten gespreizt wurden;

und wobei das Verfahren **dadurch gekennzeichnet ist, dass** der Empfang zu diesem Zweck iterativ Folgendes einsetzt:

- eine Filterung mittels eines einzelnen linearen Filters (202, 202'), das geeignet ist, die empfangenen Daten, gegebenenfalls nach Subtraktion einer Schätzung von Interferenzen, zu verarbeiten, um einen K-dimensionalen Vektor zu erzeugen, der einer Bewertung ($\hat{S}$) der modulierten Daten entspricht, die vor der Spreizung des Schritts (B) gesendet wurden, wobei diese Filterung insbesondere die Raumdiversity der mehreren Empfangsantennen berücksichtigt;
- vor oder nach der Filterung eine Subtraktion von Interferenzen (201), die eine Schätzung von Interferenzen zwischen Antennen MAI, zwischen Daten ISI und zwischen Benutzern MUI verwendet, die vorhergehend ausgehend von Informationen regeneriert wurde, die auf der Grundlage eines K-dimensionalen Vektors ($\hat{S}$) berechnet wurden, der durch eine vorhergehende Filterung erzeugt wurde;
- eine Verarbeitung, die eine Schätzung von Interferenzen auf den empfangenen Daten ausgehend von Informationen erzeugt, die auf der Grundlage des K-dimensionalen Vektors ($\hat{S}$) berechnet wurden, wobei diese Verarbeitung eine Vektorverarbeitung mit gewichtetem Ausgang (203), mindestens eine Decodierung (206) und eine Regenerierung von Interferenzen (210, 210') einsetzt, wobei die Vektorverarbeitung mit gewichtetem Ausgang (203) den K-dimensionalen Vektor ($\hat{S}$) verarbeitet und eine probabilistische Information pro moduliertes Datenbit erzeugt, die durch die Decodierung nutzbar ist, wobei die Decodierung (206) eine probabilistische Größe ($\lambda$) ausgehend von der probabilistischen Information erzeugt, wobei die Regenerierung von Interferenzen (210) eine Schätzung von Interferenzen auf der Grundlage dieser probabilistischen Größe ($\lambda$) erzeugt, wobei diese Schätzung von Interferenzen dann rekursiv an den nächsten Subtraktionsschritt (201) gesendet wird.

2. Empfangsverfahren nach Anspruch 1, **dadurch gekennzeichnet, dass** die Spreizung von Schritt (B) beim Senden mit K strikt größer als N durchgeführt wird.

3. Verfahren nach einem der vorhergehenden Ansprüche, **dadurch gekennzeichnet, dass** der Empfang angepasst ist, um Daten, die beim Senden im Schritt (B) gespreizt wurden, unabhängig pro Antenne mit einer Anzahl von Wegen pro Antenne zu verarbeiten, die strikt größer ist als 1, wobei die Spreizungsmatrix ($\mathbf{G_n}$) blockweise mit einer

Anzahl von Blöcken diagonal ist, die gleich der Anzahl der Antennen ist, wobei die Blöcke ausgehend von N/T Orthogonalcodes konstruiert wurden.

4. Verfahren nach einem der Ansprüche 1 bis 2, **dadurch gekennzeichnet, dass** der Empfang angepasst ist, um Daten zu verarbeiten, die bei der Sendung im Schritt (B) mittels einer vollen Spreizungsmatrix ($\mathbf{G_n}$) gespreizt wurden, die ausgehend von N Orthogonalcodes konstruiert ist.

5. Empfangsverfahren nach einem der vorhergehenden Ansprüche, **dadurch gekennzeichnet, dass** das einzelne lineare Filter (202, 202') gemäß dem Kriterium der Minimierung des mittleren quadratischen Fehlers abgeleitet wird.

6. Empfangsverfahren nach einem der Ansprüche 1 bis 4, **dadurch gekennzeichnet, dass** die Spreizung im Sendeschritt (B) auf periodische Art und Weise durchgeführt wurde, und dadurch, dass das einzelne lineare Filter (202, 202') gemäß dem Kriterium der Minimierung des sogenannten unbedingten mittleren quadratischen Fehlers abgeleitet wird, wobei das Filter für einen gegebenen Kanal zeitkonstant ist.

7. Empfangsverfahren nach einem der Ansprüche 1 bis 4, **dadurch gekennzeichnet, dass** das einzelne lineare Filter ein vektorangepasstes Filter ist.

8. Empfangsverfahren nach einem der Ansprüche 1 bis 4, **dadurch gekennzeichnet, dass** das einzelne lineare Filter zuerst gemäß dem Kriterium der Minimierung des mittleren quadratischen Fehlers abgeleitet wird, dann ab einer gegebenen Iteration ein vektorangepasstes Filter wird.

9. Empfangsverfahren nach einem der vorhergehenden Ansprüche, **dadurch gekennzeichnet, dass** die Filterung insbesondere die Raumdiversity der mehreren Empfangsantennen durch Maximieren des Signal/Rauschverhältnisses am Ausgang der Filterung (202) berücksichtigt.

10. Empfangsverfahren nach einem der vorhergehenden Ansprüche, **dadurch gekennzeichnet, dass** das einzelne Filter ausgehend von gleitenden Fenstern berechnet wird.

11. Empfangsverfahren nach Anspruch 10, **dadurch gekennzeichnet, dass** die Regenerierung von Interferenzen (210) eine Schätzung von Interferenzen ausgehend von einer Abschätzung ($\bar{S}$) der gesendeten modulierten Daten erzeugt, wobei die Abschätzung ($\bar{S}$) im Sinne des Kriteriums der Minimierung des mittleren quadratischen Fehlers auf der Grundlage einer sogenannten extrinsischen Information ($\xi$) berechnet (209) wird, die eine Funktion der vorhergehend gesendeten Bits ist, die am Ausgang der Decodierung (206) verfügbar sind.

12. Empfangsverfahren nach einem der Ansprüche 1 bis 10, **dadurch gekennzeichnet, dass** die Daten beim Senden vor dem Schritt (A) codiert und verschachtelt wurden, und dadurch, dass beim Empfang die Verarbeitung, die eine Schätzung von Interferenzen erzeugt, Folgendes einsetzt:

• die Vektorverarbeitung mit gewichtetem Ausgang (203) ausgehend vom K-dimensionalen Vektor ($\hat{S}$) und Decodierungsstatistiken ($\Pi$), die von einer Decodierung (206) stammen, die eine Statistik (A) pro moduliertes Datenbit erzeugt;
• eine Entschachtelung (205) auf Binärebene von extrinsischen Statistiken ($\Xi$), die ausgehend von der vorhergehend erzeugten probabilistischen Größe (A) gefunden werden;
• die mindestens eine Decodierung (206) mit gewichtetem Eingang und Ausgang ausgehend von den so entschachtelten Daten ($\varphi$), wodurch eine probabilistische Größe ($\lambda$) über sämtliche Bits erzeugt wird;
• eine Verschachtelung (208a bis 208b) auf Binärebene von extrinsischen Statistiken ($\xi$), die ausgehend von der probabilistischen Größe ($\lambda$) gefunden werden, wobei die so verschachtelten neuen Statistiken ($\Pi$) dann rekursiv an den folgenden Schritt der Vektorverarbeitung mit gewichtetem Ausgang (203) gesandt werden;
• wobei die Regenerierung von Interferenzen (210, 210') eine Schätzung von Interferenzen auf der Grundlage einer Abschätzung ($\bar{S}$) der gesendeten modulierten Daten erzeugt, die im Sinne des Kriteriums der Minimierung des mittleren quadratischen Fehlers ausgehend von den verschachtelten neuen Statistiken ($\Pi$) berechnet wurden, wobei diese Schätzung von Interferenzen dann rekursiv an den nächsten Schritt der Subtraktion (201) gesandt wird.

13. Empfangsverfahren nach einem der Ansprüche 9 bis 12, **dadurch gekennzeichnet, dass** die Vektorverarbeitung mit gewichtetem Ausgang (203) gemäß dem optimalen Maximum-a-posteriori-Kriterium abgeleitet wird.

**14.** Empfangsverfahren nach einem der Ansprüche 9 bis 12, **dadurch gekennzeichnet, dass** die Vektorverarbeitung mit gewichtetem Ausgang (203) mittels eines Algorithmus zur Kugeldecodierung mit Listen ausgeführt wird.

**15.** Empfangsverfahren nach einem der Ansprüche 9 bis 12, **dadurch gekennzeichnet, dass** die Vektorverarbeitung mit gewichtetem Ausgang (203) eine iterative lineare Unterdrückung von Interferenzen ist, die gemäß einem Kriterium der Minimierung des mittleren quadratischen Fehlers abgeleitet wird.

**16.** Empfangsverfahren nach einem der Ansprüche 9 bis 12, **dadurch gekennzeichnet, dass** die Vektorverarbeitung mit gewichtetem Ausgang (203) eine iterative lineare Unterdrückung von Interferenzen ist, die gemäß dem Kriterium der Maximierung des Signal/Rauschverhältnisses unter Verwendung angepasster Filter abgeleitet wird.

**17.** Empfangsverfahren nach einem der Ansprüche 9 bis 12, **dadurch gekennzeichnet, dass** die Vektorverarbeitung mit gewichtetem Ausgang (203) den aufeinanderfolgenden Einsatz mehrerer unterschiedlicher Vektorverarbeitungen ausgehend von (einer) gegebenen Iteration/en aufweist, wobei jede dieser Vektorverarbeitungen Folgendes sein kann: ein Algorithmus, der gemäß dem optimalen Maximum-a-posteriori-Kriterium abgeleitet wird, oder ein Algorithmus zur Kugeldecodierung mit Listen, oder ein Algorithmus, der gemäß dem Kriterium der Minimierung des mittleren quadratischen Fehlers abgeleitet wird, oder ein Algorithmus, der gemäß dem Kriterium der Maximierung des Signal/Rauschverhältnisses unter Verwendung von angepassten Filtern abgeleitet wird.

**18.** Empfangsverfahren nach einem der Ansprüche 1 bis 17, **dadurch gekennzeichnet, dass** die probabilistische Größe ($\lambda$) am Decodierungsausgang (206) der Logarithmus eines Wahrscheinlichkeitsverhältnisses von A-posteriori-Informationen pro modulierten Datenbits ist.

**19.** Empfangsverfahren nach dem vorhergehenden Anspruch, **dadurch gekennzeichnet, dass** die Decodierung (206) die probabilistische Größe ($\lambda$) mittels eines Viterbi-Algorithmus mit gewichtetem Eingang und Ausgang berechnet.

**20.** Empfangsverfahren nach einem der vorhergehenden Ansprüche, **dadurch gekennzeichnet, dass** die Spreizung beim Senden in Schritt (B) gemäß den Frequenzen ausgeführt wird, wobei die Sendung vor dem Empfang vom Typ Mehrträger ist.

**21.** Empfangsverfahren nach einem der Ansprüche 1 bis 19, **dadurch gekennzeichnet, dass** die Spreizung beim Senden im Schritt (B) gemäß der Zeit ausgeführt wird, wobei die Sendung vor dem Empfang vom Typ Einträger ist.

**22.** Empfangssystem für Kommunikationen über einen frequenzselektiven Kanal mit mehreren Sendeantennen und mit mehreren Empfangsantennen, wobei das System geeignet ist, durch die Empfangsantennen empfangene Daten zu verarbeiten, die bei ihrer Sendung aufeinanderfolgend codiert wurden und dann:

(A) auf einer Anzahl K von Wegen moduliert wurden, wobei K strikt größer als die Anzahl T der Sendeantennen ist; und
(B) mit einer periodischen oder aperiodischen Spreizungsmatrix ($G_n$) mit den Dimensionen NxK, wo N strikt größer ist als T, auf Vektoren der Dimension K der modulierten Daten gespreizt wurden;

**dadurch gekennzeichnet, dass** das System zu diesem Zweck Folgendes aufweist:

- ein einzelnes lineares Filter (202, 202'), das geeignet ist, die empfangenen Daten, gegebenenfalls nach Subtraktion einer Schätzung von Interferenzen, zu verarbeiten, um einen K-dimensionalen Vektor ($\hat{S}$) zu erzeugen, der einer Bewertung der modulierten Daten entspricht, die vor der Spreizung des Schritts (B) gesendet wurden, wobei dieses Filter insbesondere die Raumdiversity der mehreren Empfangsantennen berücksichtigt;
- dem einzelnen Filter vor- oder nachgelagert einen Interferenzsubtrahierer (201), der eine Schätzung von Interferenzen zwischen Antennen MAI, zwischen modulierten Daten ISI und zwischen Benutzern MUI verwendet, die vorhergehend ausgehend von Informationen neu erzeugt wurden, die auf der Grundlage eines K-dimensionalen Vektors ($\hat{S}$) berechnet wurden, der vorhergehend durch das einzelne Filter erzeugt wurde;
- Verarbeitungsmittel, die geeignet sind, um eine Schätzung von Interferenzen auf den empfangenen Daten ausgehend von Informationen zu erzeugen, die auf der Grundlage des K-dimensionalen Vektors ($\hat{S}$) berechnet wurden, wobei die Verarbeitungsmittel Vektorverarbeitungsmittel mit gewichtetem Ausgang (203), mindestens einen Decodierer (206) und einen Interferenzregenerator (210, 210') einsetzen, wobei die Vektorverarbeitungsmittel mit gewichtetem Ausgang (203) geeignet sind, den K-dimensionalen Vektor ($\hat{S}$) zu verarbeiten und eine probabilistische Information pro moduliertes Datenbit zu erzeugen, die durch den Decodierer nutzbar ist, wobei der Decodierer (206) geeignet ist, eine probabilistische Größe ($\lambda$) ausgehend von der probabilistischen Information zu erzeugen, wobei der Interferenzregenerator (210, 210') eine Schätzung von Interferenzen auf der Grundlage dieser probabilistischen Größe ($\lambda$) erzeugt, wobei diese Schätzung von Interferenzen dann rekursiv an den Subtrahierer (201) gesendet wird;

wobei diese verschiedenen Elemente des Empfangssystems geeignet sind, auf iterative Art und Weise eingesetzt zu werden.

23. Empfangssystem nach dem vorhergehenden Anspruch, **dadurch gekennzeichnet, dass** das einzelne lineare Filter gemäß dem Kriterium der Minimierung des mittleren quadratischen Fehlers abgeleitet ist.

24. Empfangssystem nach Anspruch 22, **dadurch gekennzeichnet, dass** das einzelne lineare Filter ein angepasstes Filter ist.

25. Empfangssystem nach Anspruch 22, **dadurch gekennzeichnet, dass** das einzelne lineare Filter zuerst gemäß dem Kriterium der Minimierung des mittleren quadratischen Fehlers abgeleitet wird und dann ab einer gegebenen Iteration ein angepasstes Filter wird.

26. Empfangssystem nach einem der Ansprüche 22 bis 25, **dadurch gekennzeichnet, dass**:

 • das Vektorverarbeitungsmittel mit gewichtetem Ausgang (203) geeignet ist, ausgehend vom letzten K-dimensionalen Vektor ($\hat{\boldsymbol{S}}$) und von Decodierungsstatistiken ($\Pi$), die von einer Decodierung (206) stammen, zu demodulieren und eine Statistik ($\Lambda$) pro moduliertes Datenbit zu erzeugen;
 • die Verarbeitungsmittel, die eine Schätzung von Interferenzen erzeugen, ferner einen Entschachtler (205) auf Binärebene von extrinsischen Statistiken ($\Xi$) aufweisen, die ausgehend von der vorhergehend erzeugten probabilistischen Größe ($\Lambda$) gefunden werden;
 • der mindestens eine Decodierer (206) mit gewichtetem Eingang und Ausgang geeignet ist, ausgehend von den so entschachtelten Daten ($\varphi$) zu decodieren und eine probabilistische Größe ($\lambda$) über sämtliche Bits zu erzeugen;
 • die Verarbeitungsmittel, die eine Schätzung von Interferenzen erzeugen, ferner einen Verschachtler (208a bis 208b) auf Binärebene von extrinsischen Statistiken ($\xi$) aufweisen, die ausgehend von der probabilistischen Größe ($\lambda$) gefunden werden, wobei die so verschachtelten neuen Statistiken ($\Pi$) dann rekursiv an das Vektorverarbeitungsmittel mit gewichtetem Ausgang (203) gesandt werden;
 • wobei der Regenerator (210, 210') von Interferenzen geeignet ist, eine Schätzung von Interferenzen auf der Grundlage einer Abschätzung ($\underline{\boldsymbol{S}}$) der gesendeten modulierten Daten zu erzeugen, die im Sinne des Kriteriums der Minimierung des mittleren quadratischen Fehlers ausgehend von den neuen verschachtelten Statistiken ($\Pi$) berechnet (209) wurden, wobei diese Schätzung von Interferenzen dann rekursiv an den Subtrahierer (201) gesandt wird.

27. Übertragungssystem, das ein Empfangssystem nach einem der Ansprüche 22 bis 26 aufweist, **dadurch gekennzeichnet, dass** es ferner Folgendes aufweist:

 - ein Sendesystem, das mehrere Sendeantennen aufweist und geeignet ist, digitale Daten zu codieren, die codierten digitalen Daten auf einer Anzahl K von Wegen zu modulieren, wobei K strikt größer ist als die Anzahl T der Sendeantennen, und mit einer periodischen oder aperiodischen Spreizungsmatrix ($\mathbf{G_n}$) mit den Dimensionen N x K, wo N strikt größer ist als T, auf den Vektoren der Dimension K der modulierten Daten zu spreizen;
 - einen frequenzselektiven Übertragungskanal.

**Claims**

1. Reception method for communication over frequency-selective channels with a plurality of send antennas and a plurality of receive antennas, the reception being able to process data received by the receive antennas that, on sending, had been successively encoded then:

 (A) modulated over a number K of channels, K being strictly greater than the number T of send antennas; and
 (B) spread with a periodic or aperiodic spreading matrix ($G_n$) of dimensions N * K where N is strictly greater than T, over the K-dimensional vectors of the modulated data;

and said method being **characterized in that** the reception uses iteratively for this purpose:

- a filtering by means of a single linear filter (202,202') adapted to process the received data, where applicable after subtracting an interference estimate, to generate a K-dimensional vector corresponding to an evaluation ($\hat{S}$) of the modulated data sent before the spreading of step (B), this filtering notably taking account of the spatial diversity of the plurality of receive antennas;

- before or after said filtering, a subtraction of interference (201) using an inter-antenna interference estimate MAI, an inter-symbol interference estimate ISI, and an inter-user interference estimate MUI previously regenerated based on information computed on the basis of a K-dimensional vector ($\hat{S}$) generated by a previous filtering;

- a processing to generate an interference estimate on the received data, based on information computed on the basis of the K-dimensional vector ($\hat{S}$), this processing using vectorized weighted output processing (203), at least one decoding (206) and a regeneration of interference (210, 210'), the vectorized weighted output processing (203) processing the K-dimensional vector ($\hat{S}$) and generating modulated data bit probabilistic information usable by the decoding, the decoding (206) generating a probabilistic quantity ($\lambda$) based on said probabilistic information, the interference regeneration (210) generating an interference estimate on the basis of this probabilistic quantity ($\lambda$), this interference estimate then being sent recursively to the next subtracting step (201).

2. Reception method according to Claim 1, **characterized in that** the spreading of the sending step (B) is effected with K being strictly greater than N.

3. Method according to one of the preceding claims, **characterized in that** the reception is adapted to process data that, on sending, had been spread in step (B), independently for antenna with a number of channels per antenna strictly greater than 1, the spreading matrix ($G_n$) being block-wise diagonal with an equal number of blocks or antennas, the blocks having been constructed based on orthogonal N/T codes.

4. Method according to one of Claims 1 to 2, **characterized in that** the reception is adapted to process data that, on sending, had been spread in step (B) by means of a full spreading matrix ($G_n$) constructed based on N orthogonal codes.

5. Reception method according to one of the preceding claims, **characterized in that** the single linear filter (202, 202') is derived in accordance with the criterion of minimizing the mean square error.

6. Reception method according to one of Claims 1 to 4, **characterized in that** the spreading of the sending step (B) has been effected periodically, and **in that** the single linear filter (202, 202') is derived in accordance with the criterion of minimizing the so-called unconditional mean square error, the filter being invariant in time for a given channel.

7. Reception method according to one of Claims 1 to 4, **characterized in that** the single linear filter is a vectorized matched filter.

8. Reception method according to one of Claims 1 to 4, **characterized in that** the single linear filter is first derived in accordance with the criterion of minimizing the mean square error, then becomes a vectorized matched filter onwards of a given iteration.

9. Reception method according to one of the preceding claims, **characterized in that** the filtering notably takes account of the spatial diversity of the plurality of receive antennas by maximizing the signal-to-noise ratio after filtering (202).

10. Reception method according to one of the preceding claims, **characterized in that** the single filter is computed based on sliding windows.

11. Reception method according to Claim 10, **characterized in that** the interference regeneration (210) generates an interference estimate based on an estimate ($\bar{S}$) of the sent modulated data, the estimate ($\bar{S}$) computed (209) in the sense of the criterion of minimizing the mean square error on the basis of so-called extrinsic ($\xi$) information that is a function of the bits sent previously available after decoding (206).

12. Reception method according to one of Claims 1 to 10, **characterized in that** the data, on sending, had been coded and interleaved before step (A), and **in that**, on receiving, said processing generating an interference estimate uses:

• said vectorized weighted output processing (203), based on the K-dimensional vector ($\hat{S}$) and on decoding statistics (n) resulting from decoding (206), generating a statistic ($\Lambda$) per modulated data bit;
• a de-interleaving (205) at the binary level of extrinsic statistics ($\Xi$) found based on the probabilistic quantity ($\lambda$) previously generated;
• said at least one decoding (206) with weighted input and output, based on data thus interleaved ($\varphi$) producing a probabilistic quantity ($\lambda$) over all of the bits;
• an interleaving (208a-208b) at the binary level of the extrinsic statistics ($\xi$) found based on the probabilistic quantity ($\lambda$), said new statistics interleaved in this way (n) then being sent recursively to the next step of vectorized weighted output processing (203);
• said interference regeneration (210, 210') generating an interference estimate on the basis of an estimate ($\overline{S}$) of the sent modulated data, which have been computed (209) in the sense of the criterion of minimizing the mean square error based on said new interleaved statistics (n), this interference estimate then being sent recursively to the next subtracting step (201).

13. Reception method according to one of Claims 9 to 12, **characterized in that** the vectorized weighted output processing (203) is derived in accordance with the optimal Maximum A Posteriori criterion.

14. Reception method according to one of Claims 9 to 12, **characterized in that** the vectorized weighted output processing (203) is performed by means of a list sphere decoding algorithm.

15. Reception method according to one of Claims 9 to 12, **characterized in that** the vectorized weighted output processing (203) is an iterative linear interference cancellation derived in accordance with a criterion of minimizing the mean square error.

16. Reception method according to one of Claims 9 to 12, **characterized in that** the vectorized weighted output processing (203) is an iterative linear interference cancellation derived in accordance with the criterion of maximizing the signal-to-noise ratio using matched filters.

17. Reception method according to one of Claims 9 to 12, **characterized in that** the vectorized weighted output processing (203) comprises the successive use of several different vectorized processes onwards of a given iteration or iterations, each of these vectorized processes being able to be: an algorithm derived in accordance with the optimal Maximum A Posteriori criterion, or a list sphere decoding algorithm, or an algorithm derived in accordance with the criterion of minimizing the mean square error, or an algorithm derived in accordance with the criterion of maximizing the signal-to-noise ratio using matched filters.

18. Reception method according to one of Claims 1 to 17, **characterized in that** said probabilistic quantity ($\lambda$) after decoding (206) is the logarithm of a ratio of modulated data bit information *a posteriori* probabilities.

19. Reception method according to the preceding claim, **characterized in that** the decoding (206) computes said probabilistic quantity ($\lambda$) by means of a weighted input and output Viterbi algorithm.

20. Reception method according to one of the preceding claims, **characterized in that** the spreading of the sending step (B) being performed in frequency, the transmission before reception was of multi-carrier type.

21. Reception method according to one of Claims 1 to 19, **characterized in that** the spreading of the sending step (B) being performed in time, the transmission before reception was of single-carrier type.

22. Reception system for communication over frequency-selective channels with a plurality of send antennas and a plurality of receive antennas, the system being adapted to process data received by the receive antennas that, on sending, had been successively encoded then:

(A) modulated over a number K of channels, K being strictly greater than the number T of send antennas; and
(B) spread with a generic periodic or aperiodic spreading matrix ($G_n$) of dimensions N * K where N is strictly greater than T, over the K-dimensional vectors of the modulated data;

**characterized in that** the system comprises for this purpose:

- a single linear filter (202, 202') adapted to process the received data, where applicable after subtracting an interference estimate, to generate a K-dimensional vector ($\hat{S}$) corresponding to an evaluation of the modulated data sent before the spreading of step (B), this filter notably taking account of the spatial diversity of the plurality of receive antennas;

- upstream or downstream of said single filter, an interference subtractor (201) using an inter-antenna interference estimate MAI, an inter-symbol interference estimate ISI, and an inter-user interference estimate MUI previously regenerated based on information computed on the basis of a K-dimensional vector ($\hat{S}$) previously generated by the single filter;

- processing means adapted to generate an interference estimate on the received data, based on information computed on the basis of the K-dimensional vector ($\hat{S}$), said processing means comprising vectorized weighted output processing means (203), at least one decoder (206) and an interference regenerator (210, 210'), said vectorized weighted output processing means being able to process the K-dimensional vector ($\hat{S}$) and to generate modulated data bit probabilistic information usable by the decoder, the decoder (206) being adapted to generate a probabilistic quantity ($\lambda$) based on said probabilistic information, the interference regenerator (210, 210') generating an interference estimate on the basis of this probabilistic quantity ($\lambda$), this interference estimate then being sent recursively to the subtractor (201);

these various elements of the reception system being adapted to be used iteratively.

23. Reception system according to the preceding claim, **characterized in that** the single linear filter is derived in accordance with the criterion of minimizing the mean square error.

24. Reception system according to Claim 22, **characterized in that** the single linear filter is a matched filter.

25. Reception system according to Claim 22, **characterized in that** the single linear filter is first derived in accordance with the criterion of minimizing the mean square error, then becomes a matched filter onwards of a given iteration.

26. Reception system according to one of Claims 22 to 25, **characterized in that**:

• said vectorized weighted output processing mean (203), is adapted to demodulate based on the last K-dimensional vector ($\hat{S}$) and on decoding statistics (n) resulting from decoding (206), and to generate a statistic ($\Lambda$) per modulated data bit;

• said processing means generating an interference estimate furthermore comprising a de-interleaver (205) at the binary level of extrinsic statistics ($\Xi$) found based on the probabilistic quantity ($\Lambda$) and previously generated;

• said at least one weighted input and output decoder (206), is adapted to decode based on the data de-interleaved in this way ($\varphi$), and to produce a probabilistic quantity ($\lambda$) over all of the bits;

• said processing means generating an interference estimate furthermore comprising an interleaver (208a-208b) at the binary level of extrinsic statistics ($\xi$) found based on the probabilistic quantity ($\lambda$), said new statistics interleaved in this way (n) then being sent recursively to the means of vectorized weighted output processing (203);

• said interference regenerator (210, 210') being adapted to generate an interference estimate on the basis of an estimate ($\overline{S}$) of the sent modulated data, which have been computed (209) in the sense of the criterion of minimizing the mean square error based on said new interleaved statistics (n), this interference estimate then being sent recursively to the subtractor (201).

27. Transmission system comprising a reception system according to any one of Claims 22 to 26, **characterized in that** it furthermore comprises:

- a transmission system comprising a plurality of send antennas and adapted to encode digital data, to modulate the encoded digital data over a number K of channels, K being strictly greater than the number T of send antennas, and to spread with a periodic or aperiodic spreading matrix ($G_n$) of dimensions N*K where N is strictly greater than T, over the K-dimensional vectors of the modulated data;
- a frequency-selective transmission channel.

Figure 1

Figure 2

Figure 3

Figure 4

Figure 5

Figure 6

Figure 7

Figure 8a

Figure 8b

$$\hat{S}=F\left(Y-B\bar{S}\right)=F'Y-B'\bar{S}\Rightarrow F'=F\,;B'=FB$$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2841068

**Littérature non-brevet citée dans la description**

- **A.M. CHAN ; G.W. WORNELL.** A New Class of Efficient Block-Iterative Interference Cancellation Techniques for Digital Communication Receivers. *IEEE J. VLSI Signal Processing (Special Issue on Signal Processing for Wireless Communication Systems),* Janvier 2002, vol. 30, 197-215

- **W. WANG ; V.H. POOR.** Iterative (Turbo) Soft Interference Cancellation and Decoding for Coded CDMA. *IEEE Trans. Commun.,* Septembre 1999, vol. COM-47 (9), 2356-2374
- **B.M. HOCHWALD ; S. TEN BRINK.** Achieving Near-Capacity on a Multiple-Antenna Channel. *IEEE Trans. Commun.,* Mai 2003, vol. COM-51 (3), 389-399